(19) Europäisches Patentamt
European Patent Office
Office européen des brevets

(11) **EP 4 660 368 A1**

(12) **EUROPEAN PATENT APPLICATION**
published in accordance with Art. 153(4) EPC

(43) Date of publication:
**10.12.2025 Bulletin 2025/50**

(21) Application number: **24750388.1**

(22) Date of filing: **01.02.2024**

(51) International Patent Classification (IPC):
*D06M 13/332* (2006.01)     *B01D 53/04* (2006.01)
*B01D 53/62* (2006.01)      *B01D 53/81* (2006.01)
*B01J 20/26* (2006.01)      *B01J 20/28* (2006.01)
*B01J 20/30* (2006.01)      *C08F 8/32* (2006.01)
*C08J 9/28* (2006.01)       *D06M 101/28* (2006.01)

(52) Cooperative Patent Classification (CPC):
**B01D 53/04; B01D 53/62; B01D 53/81;
B01J 20/26; B01J 20/28; B01J 20/30; C08F 8/32;
C08J 9/28; D06M 13/332;** D06M 2101/28;
Y02C 20/40

(86) International application number:
**PCT/JP2024/003309**

(87) International publication number:
**WO 2024/162439 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.02.2023 JP 2023015577
27.06.2023 JP 2023105043
27.06.2023 JP 2023105044**

(71) Applicant: **Toyobo Co., Ltd.
Kita-ku
Osaka-shi, Osaka 530-0001 (JP)**

(72) Inventors:
• **NAGAI, Satoru**
**Otsu-shi, Shiga 520-0292 (JP)**
• **YAHARA, Masaki**
**Otsu-shi, Shiga 520-0292 (JP)**
• **TANAKA, Hina**
**Otsu-shi, Shiga 520-0292 (JP)**
• **KAWASAKI, Atsushi**
**Otsu-shi, Shiga 520-0292 (JP)**

(74) Representative: **Vossius & Partner
Patentanwälte Rechtsanwälte mbB
Siebertstrasse 3
81675 München (DE)**

(54) **AMINO GROUP-CONTAINING FIBER, MANUFACTURING METHOD FOR SAME, ARTICLE USING SAID FIBER, MOLDING, CARBON DIOXIDE ADSORPTION MATERIAL INCLUDING SAME, USE METHOD FOR CARBON DIOXIDE ADSORPTION MATERIAL, AND CARBON DIOXIDE SEPARATION/RECOVERY DEVICE**

(57)     An object of the present invention is to provide a fiber that can exhibit various high performances in a short period of time, i.e., is excellent in rate and that allows for high productivity. An amino-group-containing fiber according to the present invention contains 2.0 mmol/g or more of amino groups and has a crosslinking structure, wherein the amino-group-containing fiber has a saturated moisture absorption/adsorption ratio of 10 mass% or more at 20°C and 65% RH, and has a specific surface area of 10 to 60 $m^2$/g and an average pore size of 10 to 1000 nm as measured by mercury porosimetry. Further, a second object of the present invention is to provide a formed body that can sorb and remove $CO_2$ from a gas having a relatively low $CO_2$ concentration under coexistence of moisture, for example, can sorb and remove $CO_2$ therefrom with excellent amine efficiency. A formed body of an amino-group-containing resin according to the present invention includes 2.0 mmol or more of amino groups per g of the formed body, wherein the formed body is provided with a macropore that is based on a pore classification of the International Union of Pure and Applied Chemistry, and the macropore has a specific surface area of 0.1 $m^2$ or more per g of the formed body, and has a pore volume of 0.01 mL or more per g of the formed body.

EP 4 660 368 A1

**Description**

TECHNICAL FIELD

The present invention relates to an amino-group-containing fiber, a method of producing the amino-group-containing fiber, a product using the amino-group-containing fiber, a formed body, a carbon dioxide sorbent including the formed body, a method of using the carbon dioxide sorbent, and a carbon dioxide separation/capture device.

BACKGROUND ART

A fiber containing nitrile groups can be subjected to various types of treatment by utilizing reactivity of the nitrile groups in the fiber. Various functional materials have been developed by utilizing such a feature to introduce various functional groups. Among them, a functional material that can be used in a wide range of applications, such as an anion exchange fiber, a moisture absorbable/adsorbable fiber, and an acid and/or aldehyde adsorbable fiber, has been developed by introducing amino groups into the fiber containing the nitrile groups.

For example, Japanese Patent Laying-Open No. 63-075041 (PTL 1) discloses an anion exchange fiber obtained by pretreating an acrylic fiber with hydrazine and sodium hydroxide and then treating it with hydrazine or alkyleneamine. Moreover, Japanese Patent Laying-Open No. 2000-064175 (PTL 2) discloses an acid and/or aldehyde adsorbable fiber obtained by treating, with polyethylenepolyamine or polyethyleneimine for 5 to 10 hours, an acrylic fiber obtained by performing heat treatment at a particular temperature.

Japanese Patent Laying-Open No. 10-156179 (PTL 3) discloses that a polymer containing nitrile groups is preferably treated with hydrazine to simultaneously introduce a crosslinking structure and an amine structure. Moreover, Japanese Patent Laying-Open No. 2009-007728 (PTL 4) discloses an amino-group-containing fiber obtained by simultaneously introducing a crosslinking structure and amino groups into a fiber by treating an acrylic-based fiber with an amino-group-containing organic compound having a structure in which the total number of amino groups in one molecule is 3 or more, the number of primary amino groups is 2 or more, and the amino groups are bonded by an alkylene group in which the number of carbon atoms is 3 or more.

Further, each of Japanese Patent Laying-Open No. 2020-044504 (PTL 5) and Japanese Patent Laying-Open No. 2019-150768 (PTL 6) discloses a gas adsorbent using a porous material, such as zeolite, activated carbon, or MOF (Metal Organic Framework), for adsorbing and removing carbon dioxide (hereinafter, also referred to as "$CO_2$"). A method of adsorbing and removing $CO_2$ by each of these gas adsorbents is generally referred to as an adsorption method. Since a $CO_2$ adsorption ability is dramatically decreased under existence of moisture in the adsorption method, another technical means, i.e., dehumidification, is required to adsorb and remove $CO_2$.

In order to solve the above-described drawback of the adsorption method, each of Japanese Patent Laying-Open No. 2019-013906 (PTL 7), Japanese Patent Laying-Open No. 2020-075215 (PTL 8) and Japanese Patent Laying-Open No. 2021-121435 (PTL 9) discloses a solid absorbent in which a chemical absorbent such as an amine in the form of a liquid is held by a porous supporting body. A method of removing $CO_2$ by such a solid absorbent is referred to as a solid absorption method. The solid absorption method does not require the dehumidification; however, the amine is detached from the supporting body due to use, with the result that $CO_2$ concentrated and captured is contaminated by the amine or the amine is diffused into atmosphere, disadvantageously. Each of WO 2010/091831 (PTL 10) and P. Li et al., Langmuir, 24, 6567-6574, (2008) (NPL 1) discloses a fibrous sorbent for which the above problem in the solid absorption method has been solved. In the fibrous sorbent, an amine compound is fixed to a supporting body by chemical bonding, and therefore the detachment is less likely to occur. However, the fibrous sorbent is not desirable from the viewpoint of LCA (Life Cycle Capture) because the $CO_2$ sorption ability is dramatically decreased under an environment in which a $CO_2$ concentration is relatively low and because an amount of $CO_2$ emission is large in a production process. Since the fibrous sorbent is oriented toward DAC (Direct Air Capture), there is also such a problem that the fibrous sorbent is not oriented toward post-combustion exhaust gas (Post-Combustion).

CITATION LIST

PATENT LITERATURE

PTL 1: Japanese Patent Laying-Open No. 63-075041
PTL 2: Japanese Patent Laying-Open No. 2000-064175
PTL 3: Japanese Patent Laying-Open No. 10-156179
PTL 4: Japanese Patent Laying-Open No. 2009-007728

PTL 5: Japanese Patent Laying-Open No. 2020-044504
PTL 6: Japanese Patent Laying-Open No. 2019-150768
PTL 7: Japanese Patent Laying-Open No. 2019-013906
PTL 8: Japanese Patent Laying-Open No. 2020-075215
PTL 9: Japanese Patent Laying-Open No. 2021-121435
PTL 10: WO 2010/091831

NON PATENT LITERATURE

NPL 1: P. Li et al., Langmuir, 24, 6567-6574, (2008)

SUMMARY OF INVENTION

TECHNICAL PROBLEM

In PTL 1, however, in order to increase an amino group content, hydrazine crosslinking, introduction of carboxyl groups, and the like are performed as pretreatment, thus resulting in a complicated process and disadvantage in cost. On the other hand, in PTL 2, amine modification treatment needs to be performed for a long period of time, which also leads to the disadvantage in cost due to a large restriction on productivity. Moreover, since attention is paid to practicality and processability such as mechanical strength in each of these prior arts, no invention has been attained from the viewpoint of exhibiting various performances such as a moisture absorption/adsorption performance, an anion exchange performance, and a gas adsorption performance in a short period of time (hereinafter, also referred to as rate). When an anion exchange fiber, a moisture absorption/adsorption fiber, or a gas adsorption fiber is integrated in a device, if the rate is low, the device becomes large in size, which is disadvantageous in cost and also requires a large installation space.

Meanwhile, in PTL 3, a large amount of nitrogen-containing functional groups can be introduced in the treatment; however, amino groups bonded to groups having electron donating properties such as alkyl groups and alkylene groups are not introduced to result in basicity weaker than that in a general weakly-basic ion exchange resin, and a crosslinking structure has a short length and becomes dense, thus failing to obtain satisfactory anion exchange performance, moisture absorption/adsorption performance, acid adsorption performance, and the like in practical use. In PTL 4, the number of carbon atoms of the alkylene group between the amino groups is 3 or more, with the result that amine modification efficiency per mass becomes inevitably low. As a result, energy cost required for the production can be suppressed, but chemical cost is increased. Also, in each of these prior arts, no invention from the viewpoint of the rate has been attained.

According to each of the conventional arts such as PTL 5 to PTL 10 and NPL 1, a technique for effectively separating and removing $CO_2$ with, for example, excellent amine efficiency from a gas having a relatively low $CO_2$ concentration and coexisting with moisture has not been realized, and development of such a technique has been desired. Here, the "amine efficiency" means a $CO_2$ sorption amount with respect to an amount of amino groups introduced into a sorbent (formed body), and is a value obtained by determining "$CO_2$ sorption amount (mmol/g) / amino group amount (mmol/g)". As the value is larger, the amine efficiency can be evaluated to be more excellent.

The present invention has been made to solve the above-described problems of the conventional arts, and has a first object to provide: a fiber that can exhibit various high performances in a short period of time, i.e., is excellent in rate and that allows for high productivity; and a product using and containing the fiber.

A second object thereof is to provide: a formed body that can sorb and remove $CO_2$ from a gas having a relatively low $CO_2$ concentration under coexistence of moisture, for example, can sorb and remove $CO_2$ with excellent amine efficiency therefrom; a carbon dioxide sorbent including the formed body; a method of using the carbon dioxide sorbent; and a carbon dioxide separation/capture device.

SOLUTION TO PROBLEM

As a result of diligent study to achieve the above objects, the present inventors have found that the various high performances can be exhibited in a short period of time by configuring an amino-group-containing resin to be a porous body having a particular specific surface area and a particular pore structure. Further, the present inventors have found that by selecting a nitrile-group-containing resin having a particular specific surface area and a particular pore structure as a precursor in production of such an amino-group-containing fiber, the amino-group-containing resin can be produced while maintaining high productivity even when the number of carbon atoms of an alkylene group that bonds amino groups of an amino-group-containing organic compound serving as a reactive substrate is not necessarily 3 or more.

Further, the present inventors have conducted diligent study to provide a formed body by which the above problems can be solved. As a result, it has been found that the specific surface area and pore volume of macropores that are based on the pore classification of the International Union of Pure and Applied Chemistry are closely associated with

the $CO_2$ sorption ability in the formed body. For example, it has been found that the $CO_2$ sorption ability is more improved in the formed body when the specific surface area and pore volume of the macropores that are based on the pore classification of the International Union of Pure and Applied Chemistry are large and the formed body has such a property that the formed body is plasticized by moisture absorption/adsorption even though the amount of introduced amino groups is about the same. Based on the above finding, the present inventors have reached a formed body that can sorb and remove, particularly with excellent amine efficiency, $CO_2$ from a gas having a relatively low $CO_2$ concentration under coexistence of moisture, thereby completing the present invention.

That is, the present invention is achieved by the following means.

[1] An amino-group-containing fiber containing 2.0 mmol/g or more of amino groups and having a crosslinking structure, wherein
the amino-group-containing fiber has a saturated moisture absorption/adsorption ratio of 10 mass% or more at 20°C and 65% RH, and has a specific surface area of 10 to 60 $m^2$/g and an average pore size of 10 to 1000 nm as measured by mercury porosimetry.

[2] The amino-group-containing fiber according to [1], wherein the amino-group-containing fiber has a saturated moisture absorption/adsorption ratio of 20 mass% or more at 20°C and 90% RH.

[3] The amino-group-containing fiber according to [1] or [2], wherein the amino-group-containing fiber has a fiber diameter of 10 to 50 $\mu$m.

[4] A fiber structural body containing the amino-group-containing fiber according to any one of [1] to [3].

[5] The fiber structural body according to [4], wherein the fiber structural body has a sheet shape or a monolith shape.

[6] An anion exchange fiber containing the amino-group-containing fiber according to any one of [1] to [3].

[7] An ion exchange device having the anion exchange fiber according to [6].

[8] A moisture absorbable/adsorbable/ desorbable fiber containing the amino-group-containing fiber according to any one of [1] to [3].

[9] An air conditioning element comprising the moisture absorbable/adsorbable/ desorbable fiber according to [8].

[10] An air conditioning device having the air conditioning element according to [9].

[11] A gas-adsorbable fiber comprising the amino-group-containing fiber according to any one of [1] to [3].

[12] A gas adsorption device having the gas-adsorbable fiber according to [11].

[13] An adsorption type heat cycle device having, as an adsorption core, the amino-group-containing fiber according to any one of [1] to [3].

[14] A method of producing an amino-group-containing fiber, the method comprising introducing a crosslinking structure and amino groups into a fiber by treating the fiber with an amino-group-containing organic compound, the fiber containing nitrile groups, the fiber having a specific surface area of 10 to 60 $m^2$/g and an average pore size of 10 to 1000 nm as measured by mercury porosimetry, the amino-group-containing organic compound having a structure in which the total number of amino groups in one molecule is 3 or more, the number of primary amino groups is 2 or more, and the amino groups are bonded by an alkylene group in which the number of carbon atoms is 2.

Further, the present invention provides a formed body, a carbon dioxide sorbent including the formed body, a method of using the carbon dioxide sorbent, and a carbon dioxide separation/capture device as follows.

[15] A formed body of an amino-group-containing resin, the formed body comprising 2.0 mmol or more of amino groups per g of the formed body, wherein
the formed body is provided with a macropore that is based on a pore classification of the International Union of Pure and Applied Chemistry, and
the macropore has a specific surface area of 0.1 $m^2$ or more per g of the formed body, and has a pore volume of 0.01 mL or more per g of the formed body.

[16] A formed body of an amino-group-containing resin, the formed body comprising 2.0 mmol or more of amino groups per g of the formed body,
the formed body is provided with a macropore that is based on a pore classification of the International Union of Pure and Applied Chemistry,
the macropore has a specific surface area of 0.1 $m^2$ or more per g of the formed body, and has a pore volume of 0.01 mL or more per g of the formed body,
the formed body has a glass transition temperature at a time of moisture absorption/adsorption, the glass transition temperature at the time of moisture absorption/adsorption being observed using a differential scanning calorimeter, and
the formed body has no glass transition temperature in an absolute dry state.

[17] The formed body according to [15] or [16], wherein the formed body has a saturated moisture absorption/adsorption ratio of 20 mass% or more at 20°C and 90% relative humidity.

[18] The formed body according to any one of [15] to [17], wherein the amino-group-containing resin is at least one selected from a group consisting of an acrylic-based resin and a cellulose-based resin.

[19] The formed body according to any one of [15] to [18], wherein the formed body includes a particle.

[20] The formed body according to any one of [15] to [18], wherein the formed body includes a fiber.

[21] The formed body according to [20], wherein the fiber includes a plurality of fibrillated fibers.

[22] A carbon dioxide sorbent comprising the formed body according to any one of [15] to [21].

[23] The carbon dioxide sorbent according to [22], wherein the carbon dioxide sorbent has a sheet shape or a monolith shape.

[24] A method of using a carbon dioxide sorbent, the method comprising:

preparing the carbon dioxide sorbent according to [22] or [23]; and
sorbing the carbon dioxide to the carbon dioxide sorbent under an environment in which the carbon dioxide and moisture coexist.

[25] The method of using the carbon dioxide sorbent according to [24], wherein a concentration of the carbon dioxide under the environment is 10 volume% or less.

[26] A carbon dioxide separation/capture device comprising the carbon dioxide sorbent according to [22] or [23].

ADVANTAGEOUS EFFECTS OF INVENTION

Since the amino-group-containing fiber according to the present invention has the amino groups serving as functional groups and is a porous body having a high specific surface area and a particular pore structure, a rate of adsorbing various types of substances to a solid surface thereof and a rate of absorbing various types of substances into a polymer matrix thereof are fast when adsorbing or absorbing the various types of substance to the fiber, with the result that various excellent performances such as an anion exchange performance, a moisture absorption/adsorption performance, and a gas adsorption performance can be exhibited in a short period time (i.e., at a high rate). Therefore, according to the present invention, it is possible to provide: a fiber that is excellent in rate with regard to the various performances such as the moisture absorption/adsorption performance, the anion exchange performance, and the gas adsorption performance and that allows for high productivity; and a product using and containing the fiber. By using the amino-group-containing fiber according to the present invention, it is possible to provide: a highly efficient energy-saving type and/or compact ion exchange device; an air conditioning device such as a desiccant air conditioner; a gas adsorption device for adsorbing various types of gases; an adsorption type heat cycle; and the like. Furthermore, in the method of producing the amino-group-containing fiber having the high specific surface area according to the present invention, it is a remarkable effect that the reactive substrate is rapidly diffused and penetrated into the fiber composed of the polymer that serves as a raw material, that contains the nitrile groups, and that has the particular porosity, thereby producing the amino-group-containing fiber with high productivity.

Further, according to the present invention, it is possible to provide: a formed body that can sorb and remove $CO_2$ from a gas having a relatively low $CO_2$ concentration under coexistence of moisture, for example, can sorb and remove $CO_2$ with excellent amine efficiency therefrom; a carbon dioxide sorbent including the formed body; a method of using the carbon dioxide sorbent; and a carbon dioxide separation/capture device.

DESCRIPTION OF EMBODIMENTS

Hereinafter, an amino-group-containing fiber, a method of producing the amino-group-containing fiber, a product using the amino-group-containing fiber, a formed body, a carbon dioxide sorbent including the formed body, a method of using the carbon dioxide sorbent, and a carbon dioxide separation/capture device according to embodiments (hereinafter, also respectively referred to as "first embodiment", "second embodiment", and "third embodiment") of the present invention will be described more in detail. Here, in the present specification, the expression "A to B" means the lower and upper limits of a range (i.e., A or more and B or less), and when no unit is indicated for A and a unit is indicated only for B, the unit of A and the unit of B are the same.

In the present specification, the term "adsorption" means adsorption, and refers to a phenomenon in which an adsorbate such as $CO_2$ is captured into a pore present in a surface or the like of a porous material, such as zeolite, serving as an adsorbent. In the present specification, the term "adsorption" mainly means physical adsorption. In the present specification, the term "absorption" means absorption, and refers to a phenomenon in which an absorbate such as $CO_2$ is dissolved in an absorbing agent (for example, an absorbing liquid) having amino groups such as an amine. In the present specification, the term "absorption" mainly means chemical absorption. In the present specification, the term "sorption" means sorption, and refers to a phenomenon in which a sorbate such as $CO_2$ is adsorbed to a surface or the like of a solid and is diffused into the solid and is absorbed therein at the same time. Alternatively, in the present specification, the term "sorption" refers to a phenomenon that occurs to involve the above-described "adsorption" and "absorption".

[First Embodiment]

[Amino-Group-Containing Fiber]

Hereinafter, the first embodiment will be described in detail. The amino-group-containing fiber according to the present invention has a crosslinking structure, has 2.0 mmol/g or more of amino groups serving as highly functional groups, and has a specific surface area of 10 to 60 $m^2$/g and an average pore size of 10 to 1000 nm as measured by mercury porosimetry. The amino-group-containing fiber is preferably composed of a porous polymer provided with mesopores and/or macropores having an average pore size of 10 to 1000 nm. In the present invention, the high specific surface area serves to promote the adsorption of a substance to the solid surface, and the particular pore structure provided serves to promote the diffusion of a substance into the polymer matrix, with the result that the various performances higher than those of conventional amino-group-containing fiber and ion exchange fiber can be exhibited in a short period of time.

First, the amount of the amino groups in the amino-group-containing fiber according to the present invention is 2.0 mmol/g or more, is preferably 2.5 mmol/g or more, and is more preferably 3.0 mmol/g or more. When the amount of the amino groups is less than 2.0 mmol/g, sufficient various performances may not be obtained as compared with the conventional amino-group-containing fiber, ion exchange fiber, or the like. The upper limit of the amount of the amino groups is not particularly limited, but when the amount is more than 10.0 mmol/g, swelling at the time of water absorption/adsorption and moisture absorption/adsorption may become severe to result in insufficient dimensional stability of the amino-group-containing fiber having the high specific surface area, or the various performances are peaked and a reaction time required for amine modification at the time of production may become long to result in a problem such as significantly decreased productivity.

Here, any of primary, secondary and tertiary amino groups may be employed for the amino groups, but a content ratio thereof is preferably adjusted in accordance with a purpose of use. For example, when used as an aldehyde adsorbent, it does not function unless primary and/or secondary amino groups are used. The aldehyde and the primary or secondary amino groups are chemically adsorbed to form imine or enamine by a chemical reaction, and it does not function with the tertiary amino groups. On the other hand, when used as an anti-virus material, it has been known that higher anti-virus performance is exhibited by using the tertiary amino groups.

Moreover, in order to exhibit the various high performances in a short period of time and to maintain the shape stability at the time of water absorption/adsorption and moisture absorption/adsorption, it is essential for the amino-group-containing fiber according to the present invention to have the crosslinking structure. The crosslinking structure is not particularly limited as long as it does not affect the intended performances in the present invention and the performances and quality of a product utilizing the performances, and may be any structure such as a crosslink by covalent bond, a crosslink by ionic bond, a crosslink by coordination bond, or a crosslink by polymer-molecular interaction or crystal structure.

Further, the amino-group-containing fiber according to the present invention needs to be provided with mesopores and/or macropores with the specific surface area of 10 to 60 $m^2$/g and the average pore size of 10 to 1000 nm. Here, each of the specific surface area and the average pore size refer to a value measured by mercury porosimetry (ISO15901-1).

For practical use, it is important how fast the various performances such as the anion exchange performance, the moisture absorption/adsorption performance, and the gas adsorption performance are exhibited, that is, the rate is important. For example, in the case of an adsorption type heat pump, it is important how a substance can be adsorbed within 5 minutes, whereas in the case of a rotor type dehumidifier, it is important how moisture can be absorbed/adsorbed within 30 seconds to 1 minute; however, inventions of conventional amino-group-containing fibers, ion exchange fibers, or the like have not been reviewed much from such viewpoints.

As a result of review by the present inventors, it has been found that in order to exhibit the various high performances within a short period of time of 5 minutes or 30 seconds to 1 minute, the following conditions have to be satisfied: the porous structure has the amino groups under the above-described conditions, the amino groups are fixed by the strong crosslinking structure, the porous structure has the high specific surface area; and the average pore size falls within the certain range.

That is, the porous structure that should be included in the amino-group-containing fiber according to the present invention to exhibit the various performances in a short period of time are as follows: the specific surface area needs to be 10 to 60 $m^2$/g, is preferably 12 to 55 $m^2$/g, and is more preferably 15 to 50 $m^2$/g. When the specific surface area is less than 10 $m^2$/g, the effect of promoting the adsorption and diffusion of a substance to a solid surface cannot be obtained and no satisfactory various performances can be exhibited in a short period of time, with the result that the object of the present invention cannot be achieved. On the other hand, a specific surface area of more than 60 $m^2$/g is not desirable due to the following reason: the porosity becomes too large and the strength of the material is decreased to presumably result in difficulty in a forming process; or the bulk density becomes too small and it may become difficult for a device to contain a predetermined amount thereof.

As the specific surface area is larger, the various performances tends to be able to be exhibited in a shorter period of time; however, it is not always possible to obtain an excellent one that can exhibit the various performances in a short period of time even when the specific surface area is just larger. That is, in general, as the specific surface area is larger, the average pore size is smaller; however, as the average pore size is smaller, the diffusion of a substance is deteriorated or a foreign substance closes the pore to result in decreased efficiency of capturing the substance desired to be adsorbed to the solid surface in the first place. In general, in a gas adsorbent using an inorganic porous material such as activated carbon or silica gel, presence of micropores of less than 2 nm is important; however, in the amino-group-containing fiber having the high specific surface area according to the present invention, the presence of micropores or mesopores of less than 10 nm is meaningless from the viewpoint of substance transfer.

On the other hand, in the case of macropores of more than 1000 nm, in consideration of an average free path for each substance, frequency of collision with the solid surface becomes low, thereby significantly losing the effect of promoting the adsorption of a substance to the solid surface as provided by the high specific surface area. Moreover, since the bulk density as a functional material becomes small, not only an amount of exhibition of the various performances per unit area is decreased but also the strength is significantly decreased, thus resulting in various disadvantages in practical use. Therefore, balance between the specific surface area and the average pore size is important for the structure that can exhibit the various performances in a short period of time. In this sense, in the present invention, the specific surface area of the mesopores and/or macropores is as above and the average pore size of the mesopores and/or macropores is 10 to 1000 nm, is preferably 50 to 800 nm, and is more preferably 100 to 500 nm.

Further, the form of the amino-group-containing fiber according to the present invention is not particularly limited, and the amino-group-containing fiber may be in the form of a fiber obtained by performing spinning with a solution produced from polymer fine particles, may be in the form of a pulp obtained by beating the fiber, or may be in the form of a nanofiber obtained by performing electrospinning with a solution produced from polymer fine particles, and the form of the amino-group-containing fiber can be selected in accordance with various purposes of use. Moreover, the size of each of these fibers can be appropriately selected in accordance with a purpose of use and is not particularly limited; however, when the fiber diameter is 50 $\mu$m or less and is more preferably 30 $\mu$m or less, sufficient performances can be ensured in purposes of industrial use such as various filters and ion exchange fibers, and when the fiber length is 2 mm or more and is more preferably 5 mm or more, productivity at the time of forming it into a sheet becomes excellent.

The amino-group-containing fiber according to the present invention as described above has the ability to exhibit, in a short period of time, high capacities for the various performances such as the anion exchange performance, the moisture absorption/adsorption performance, and the gas adsorption performance. In order to exhibit the moisture absorption/adsorption performance and the gas adsorption performance in a short period of time among them, the amino-group-containing fiber having the high specific surface area according to the present invention desirably has a saturated moisture absorption/adsorption ratio of at least 10 mass% or more at 20°C and 65% RH (relative humidity) and desirably has a saturated moisture absorption/adsorption ratio of 20 mass% or more at 20°C and 90% RH. When the value of the saturated moisture absorption/adsorption ratio is less than 10 mass% at 20°C and 65% RH (relative humidity), no high moisture absorption/adsorption capacity and no high gas adsorption capacity can be exhibited, with the result that the object of the present invention may not be achieved.

[Method of Producing Amino-Group-Containing Fiber]

Next, a method of producing the amino-group-containing fiber according to the present invention will be described. The amino-group-containing fiber according to the present invention can be produced by simultaneously introducing a crosslinking structure and amino groups into a fiber by treating the fiber with an amino-group-containing organic compound, the fiber being composed of a porous polymer containing nitrile groups, the fiber having a specific surface area of 10 to 60 m$^2$/g and an average pore size of 10 to 1000 nm as measured by mercury porosimetry, the amino-group-containing organic compound having a structure in which the total number of amino groups in one molecule is 3 or more, the number of primary amino groups is 2 or more, and the amino groups are bonded by an alkylene group in which the number of carbon atoms is 2 or more.

The fiber employed in the present invention, i.e., the fiber that is composed of the porous polymer containing the nitrile groups and that has the specific surface area of 10 to 60 m$^2$/g and the average pore size of 10 to 1000 nm as measured by the mercury porosimetry is not particularly limited as long as the nitrile groups are contained, and examples thereof include fibers composed of polyester, polyamide, polyimide, vinyl-based polymer, and the like, each of which has the nitrile groups. In particular, since the nitrile groups can be efficiently contained in a fiber composed of an acrylonitrile (hereinafter, referred to as AN)-based polymer and an amount of the nitrile groups can be readily adjusted, such a fiber can be preferably employed.

As such an AN-based polymer, either an AN homopolymer or a copolymer of AN and another monomer can be employed. Further, since the amino groups are introduced by a reaction between the nitrile groups and the amino-group-containing organic compound in the present invention, the amount of the introduced amino groups becomes small when an AN copolymerization ratio is too small. Therefore, when the AN copolymerization ratio is preferably 50 mass% or more, is more preferably 75 mass% or more, and is further preferably 85 mass% or more, an excellent result is likely to be obtained.

When the copolymer of AN and another monomer is employed as the AN-based polymer, the monomer that can be copolymerized with acrylonitrile may be a vinyl compound, or a plurality of types of monomers may be copolymerized. Representative examples thereof include well-known monomers that each can be copolymerized with acrylonitrile, such as: carboxylic-acid-containing monomers such as (meth)acrylic acid, itaconic acid, and salts thereof; monomers such as (meth)acrylic acid esters, (meth)acrylamide, or N-alkyl-substituted substances thereof; vinyl esters such as vinyl acetate and vinyl propionate; vinyl halides or vinylidenes such as vinyl chloride, vinyl bromide, and vinylidene chloride; unsaturated sulfonic acids such as vinyl sulfonic acid, allyl sulfonic acid, methallyl sulfonic acid, and p-styrene sulfonic acid or salts thereof; and aromatic vinyl monomers such as styrene and divinylbenzene. It should be noted that when a high anion exchange performance is required, an amount of monomers each having an acidic group is preferably small.

Moreover, means for producing the fiber composed of the porous AN-based polymer and employed in the present invention is not particularly limited, and the fiber may be produced basically by applying a known method without modification. The fiber may be in any form of a staple fiber, a tow, a thread, a knitted/woven fabric, a nonwoven fabric, a pulp, a nanofiber, or the like, and an intermediate product in a production process, a waste fiber, a waste pulp, or the like may also be employed.

As a typical method of obtaining the fiber composed of the porous AN-based polymer in the form of particles and employed in the present invention, the following method is exemplified. A monomer mixture containing 50 mass% or more of AN is used to produce a spinning solution composed of an AN-based polymer by performing water-based precipitation polymerization, the spinning solution is particularly subjected to wet type or dry/wet type (hereinafter, referred to as air gap) spinning and perform moisture/heat treatment to an undried fiber, thereby producing a fiber composed of a porous AN-based polymer and having a specific surface area of 10 to 60 $m^2$/g and an average pore size of 10 to 1000 nm as measured by mercury porosimetry. Thereafter, remaining nitrile groups of particles of the fiber are reacted with an amino-group-containing organic compound having a structure in which the total number of amino groups in one molecule is 3 or more, the number of primary amino groups is 2 or more, and the amino groups are bonded by an alkylene group in which the number of carbon atoms are 2 or more, thereby producing a fiber having 2.0 mmol/g or more of amino groups and provided with mesopores and/or macropores with a specific surface area of 10 to 60 $m^2$/g and an average pore size of 10 to 1000 nm as measured by mercury porosimetry.

In the above-described method, a typical method of providing porosity is as follows: in the above-described wet type or air gap spinning, an undried fiber obtained after stretching is provided with a relatively rough structure which has not been subjected to heat treatment such as drying densification, moisture/heat relaxing treatment, or moisture/heat tensioning treatment, specifically, the undried fiber after stretching is subjected to moisture/heat treatment at a temperature of preferably 105 to 130°C, more preferably 110 to 125°C in a state in which the water content of the undried fiber after stretching is preferably 50 to 130 mass% and is more preferably 60 to 120 mass%, and is then dried at a temperature equal to or less than that in the moisture/heat treatment, thereby obtaining the fiber composed of the porous AN-based polymer and employed in the present invention.

Further, the fiber composed of the porous AN-based polymer and employed in the present invention can be also obtained in the following manner: a plurality of spinning solutions can be used to perform composite spinning to attain a form such as a sheath-core type form, a side-by-side type form, a sandwich type form, or a random composite type form, and the same treatments as those in the above-described production method are performed.

In addition to the above-described method, the fiber composed of the porous AN-based polymer and employed in the present invention can be also obtained in the following manner: the same treatments as those in the above-described production method are performed using a spinning solution containing an AN-based polymer and an acrylic-based anti-static resin composed of methoxypolyethylene glycol methacrylate or the like.

As still another method, there is a production method of fibrillating a fiber composed of an AN-based polymer. The production method involving the fibrillation is not particularly limited, and basically, a known method may be applied without modification. An exemplary production method is as follows: by devising a beating method or condition or by using a fiber composed of an AN-based polymer that can be readily beaten, the fiber is divided to be sufficiently thin to its central portion after the fibrillation so as to sufficiently develop micro voids between fine fibers and is therefore formed into a fiber composed of a fibrillated AN-based polymer (hereinafter, also referred to as "pulp composed of a porous AN-based polymer") and having a specific surface area of 10 to 60 $m^2$/g and an average pore size of 10 to 1000 nm as measured by mercury porosimetry, and then remaining nitrile groups of the fiber (or pulp) are reacted with an amino-group-containing organic compound having a structure in which the total number of amino groups in one molecule is 3 or more, the number of primary amino groups is 2 or more, and the amino groups are bonded by an alkylene group in which the number of carbon atoms is 2 or more, thereby attaining the fiber having 2.0 mmol/g or more of the amino groups and provided with the mesopores and/or macropores with the specific surface area of 10 to 60 $m^2$/g and the average pore size of 10 to 1000 nm as measured by mercury porosimetry.

Here, since the fiber composed of the porous AN-based polymer and employed in the present invention is provided with the mesopores or macropores with the specific surface area of 10 to 60 $m^2$/g and the average pore size of 10 to 1000 nm as measured by mercury porosimetry, the adsorption of a reactive substrate to the solid surface is promoted in the above step of reaction between the nitrile groups and the amino-group-containing organic compound, and the reactive substrate is facilitated to be diffused into the polymer matrix through the pores, thereby improving the reaction rate, that is, drastically shortening the reaction time. It should be noted that when the specific surface area of the porous AN-based polymer is too large, the average pore size in the above range cannot be obtained.

The amino-group-containing organic compound employed in the present invention has the structure in which the total number of amino groups in one molecule is 3 or more, the number of primary amino groups is 2 or more, and the amino groups are bonded by an alkylene group in which the number of carbon atoms is 2 or more. By using such an amino-group-containing organic compound, the crosslinking structure and the amino groups can be introduced simultaneously in one step. That is, two or more primary amino groups are present in the compound, and these amino groups are reacted with the nitrile groups of the fiber composed of the porous polymer and having the high specific surface area, thereby forming the crosslinking structure in the fiber. Remaining amino groups that have not been consumed in the crosslinking reaction are fixed in the fiber composed of the porous polymer containing the nitrile groups and having the high specific surface area, thereby exhibiting excellent various performances.

Here, when the total number of amino groups is less than 3 in the amino-group-containing organic compound, all the amino groups are consumed in the crosslinking reaction and the sufficient various performances are less likely to be obtained accordingly, whereas when the number of primary amino groups is less than 2, the crosslinking structure is less likely to be introduced. Further, in the case of a structure in which amino groups are not bonded by an alkylene group, electron donation to the amino groups is small to cause insufficient basicity, with the result that a sufficient anion exchange performance cannot be obtained. From the viewpoint of the electron donation to the amino groups, the number of carbon atoms of the alkylene group that bonds the amino groups has to be at least 2 or more.

Specific examples of such an amino-group-containing organic compound include diethylenetriamine, 4-methyldiethylenetriamine, triethylenetetramine, 4-methyltriethylenetetramine, 4,7-dimethyltriethylenetetramine, tetraethylenepentamine, 4-methyltetraethylenepentamine, 7-methyltetraethylenepentamine, 4,7-dimethyltetraethylenepentamine, 4,10-dimethyltetraethylenepentamine, 4,7,10-trimethyltetraethylenepentamine, pentaethylenehexamine, 3,3'-imino-bis(propylamine), N-methyl-3,3'-iminobis(propylamine), lauryliminobispropylamine, N,N'-bis(3-aminopropyl)ethylenediamine, N,N'-bis(3-aminopropyl)-1,3-butylenediamine, N,N'-bis(3-aminopropyl)-1,4-butylenediamine, 1,4-bis(3-aminoethyl)piperazine, 1,4-bis(3-aminopropyl)piperazine, and polyamines such as polyethyleneimine and polyvinylamine.

Particularly, an amino-group-containing organic compound in which the primary amino groups are 40% or more of the total number of amino groups, such as diethylenetriamine, 4-methyldiethylenetriamine, triethylenetetramine, 4-methyltriethylenetetramine, 4,7-dimethyltriethylenetetramine, tetraethylenepentamine, 4-methyltetraethylenepentamine, 7-methyltetraethylenepentamine, 4,7-dimethyltetraethylenepentamine, 4,10-dimethyltetraethylenepentamine, 4,7,10-trimethyltetraethylenepentamine, pentaethylenehexamine, 3,3'-iminobis(propylamine), N-methyl-3,3'-imino-bis(propylamine), lauryliminobispropylamine, N,N'-bis(3-aminopropyl)ethylenediamine, N,N'-bis(3-aminopropyl)-1,3-butylenediamine, or N,N'-bis(3-aminopropyl)-1,4-butylenediamine, is preferable because a rate of reaction with the fiber composed of the porous AN-based polymer and having the high specific surface area is high and it is industrially advantageous in terms of production cost. It should be noted that an amino-group-containing organic compound having a structure in which the number of carbon atoms of an alkylene group that bonds amino groups is a value other than 2 or 3 leads to high cost and is not suitable for industrial use.

The amount of the amino groups to be introduced can be adjusted in accordance with the type of the amino-group-containing organic compound employed, i.e., the ratio of the primary amino groups of the compound, presence or absence of a steric hinderance group, and the like. Moreover, regarding the amount of the crosslinking structure, balance between the amount of the crosslinking structure and the amount of the amino groups can be adjusted by selection of the type of the amino-group-containing organic compound or by the concentration of the amino-group-containing organic compound in the reaction solution. For example, when a compound in which a large number of secondary or tertiary amino groups are included in one molecule is used, the amount of the crosslinking structure can be small. Moreover, when the compound in which the number of amino groups in one molecule is small is used, the amount of the amino groups can also be small. Furthermore, by lowering the concentration of the amino-group-containing organic compound in the reaction solution, the amount of the amino groups can be small while the amount of the crosslinking structure is large.

Moreover, the crosslinking structure is introduced at the same time as the amino groups by treating the fiber composed of the porous AN-based polymer and having the high specific surface area with the amino-group-containing organic compound; however, the introduction of the crosslinking structure may also be separately performed in a step other than this step so as to adjust the introduction amount of the crosslinking structure. A method of separately introducing the crosslinking structure is not particularly limited, and examples thereof include: a post-crosslinking method in which a monomer is first polymerized and the crosslinking structure is then introduced by a chemical reaction or physical energy; and the like. Particularly, a method employing the chemical post-crosslinking method after the fiber composed of the AN-based polymer is obtained is preferable because a strong crosslink by covalent bond can be introduced and the crosslinking structure is less susceptible to physical and chemical modifications due to water absorption/adsorption, moisture absorption/adsorption, and the like.

The method employing the post-crosslinking is not particularly limited, and examples thereof include a post-crosslinking method in which the nitrile groups contained in the fiber composed of the AN-based polymer in which the content of the vinyl monomer, such as AN, having the nitrile groups is 50 mass% or more are reacted with a hydrazine-based compound or formaldehyde. Particularly, the method employing the hydrazine-based compound is very excellent in the following points: the method can contribute to improvement of the various performances such as the moisture absorption/adsorption performance and the gas adsorption performance because it is stable with respect to an acid and an alkali and the crosslinking structure formed is hydrophilic; and a strong crosslink to maintain the form with the porosity provided in the polymer can be introduced. It should be noted that although details of the crosslinking structure obtained by the reaction are not identified, the crosslinking structure is presumably based on a triazole ring structure or a tetrazole ring structure.

The method of introducing the crosslink by the reaction with the hydrazine-based compound is not particularly limited as long as an intended crosslinking structure can be obtained, and the concentrations of the fiber composed of the AN-based polymer and the concentrations of the hydrazine-based compound during the reaction, a solvent used, a reaction time, a reaction temperature, and the like can be appropriately selected as required. When the reaction temperature among them is too low, a reaction rate becomes slow to result in a too long reaction time, whereas when the reaction temperature is too high, plasticization of the fiber composed of the AN-based polymer occurs, which may cause a problem that the form as the fiber is broken. Therefore, the reaction temperature is preferably 50 to 150°C, and is more preferably 80 to 120°C. Further, a part, to be reacted with the hydrazine-based compound, of the fiber composed of the AN-based polymer is not particularly limited, and can be appropriately selected in accordance with the purpose of use and the form of the fiber. Specifically, the part of the fiber to be reacted can be appropriately selected, for example, by reacting only the surface of the fiber, by entirely reacting the fiber to its core portion, or by reacting a particular limited portion of the fiber. It should be noted that examples of the hydrazine-based compound used herein include: hydrazine salts such as hydrazine hydrate, hydrazine sulfate, hydrazine hydrochloride, hydrazine nitrate, and hydrazine carbonate; and hydrazine derivatives such as ethylenediamine, guanidine sulfate, guanidine hydrochloride, guanidine nitrate, guanidine phosphate, and melamine.

A fiber structural body containing the amino-group-containing fiber according to the present invention is also included in the scope of the present invention. Examples of the forms of appearances of the amino-group-containing fiber and the fiber structural body containing the amino-group-containing fiber according to the present invention include a thread, a yarn, a filament, a woven fabric, a knitted fabric, a nonwoven fabric, a paper-shaped product, a sheet-shaped product, a monolith-shaped product, a layered body, and a cotton-like body, as well as products obtained by providing outer coatings to these. In each of these fiber structures, the amino-group-containing fiber according to the present invention may be used solely, or may be used in combination with another functional fiber, active carbon fiber, a general natural or synthetic fiber, or the like.

A material to which the amino-group-containing fiber according to the present invention is applied can be used as a functional product having a function such as an anion exchange function, a moisture absorption/adsorption function, a moisture control function, a gas adsorption function for acid, aldehyde or the like, an antibacterial function, an antifungal function, or an anti-virus function. Specifically, by using the anion exchange performance, the material can be used for water softening, desalination of water and seawater, a chemical filter, a tobacco filter, an adsorbent for water purification, and an ion exchange filtration material for nuclear power plants, whereas by using the gas adsorption performance, the material can be used for a deodorant, an adsorption element for gas treatment, an environment purification material, and the like. Moreover, by using the moisture absorption/adsorption performance, the material can be used for a dew condensation preventing material, a moisture absorbable /adsorbable/desorbable material (cloths, a construction material, wall paper, inner cotton, or the like), environment moisture control, a moisture control material, a drying material or moisture control material for closet, basement room, underfloor, bathroom, or the like, and a part of a coating material for an electronic material or the like for which moisture is very unfavorable. Furthermore, by using the antibacterial function and the antifungal performance, the material can be used for various types of filters, masks, socks, insoles, liners of shoes, towels, bathmats, evaporation plates for humidifiers, wall papers, and the like.

Therefore, an anion exchange fiber containing the amino-group-containing fiber according to the present invention, an ion exchange device having the anion exchange fiber, a moisture absorbable /adsorbable/desorbable fiber containing the amino-group-containing fiber according to the present invention, an air conditioning element including the moisture absorbable /adsorbable/desorbable fiber, an air conditioning device having the air conditioning element, a gas-adsorbable fiber containing the amino-group-containing fiber according to the present invention, a gas treatment device having the gas-adsorbable fiber, and an adsorption type heat cycle device having the amino-group-containing fiber according to the present invention as an adsorption core also fall within the scope of the present invention.

[Second Embodiment]

[Formed Body]

A formed body according to the second embodiment is a formed body of an amino-group-containing resin. The formed body includes 2.0 mmol or more of amino groups per g of the formed body. The formed body is provided with macropores that are based on the pore classification of the International Union of Pure and Applied Chemistry (hereinafter, also referred to as "IUPAC"). The macropores have a specific surface area of 0.1 $m^2$ or more per g of the formed body, and has a pore volume of 0.01 mL or more per g of the formed body. The formed body having such a feature can efficiently sorb and remove $CO_2$ from a gas having a relatively low $CO_2$ concentration under coexistence of moisture. The above gas is, for example, a so-called post-combustion exhaust gas (Post-Combustion) generated from a boiler such as a coal combustion boiler, a heavy oil combustion boiler, or a gas combustion boiler. The $CO_2$ concentration in the gas may be relatively low, and is, for example, 20 volume% or less, is preferably 15 volume% or less, and is more preferably 10 volume% or less. According to the formed body of the present embodiment, $CO_2$ can be efficiently sorbed and removed even when the gas has a $CO_2$ concentration of 10 volume% or less under coexistence of moisture. The $CO_2$ concentration in the gas may be 8 volume% or less, 6 volume% or less, or 5 volume% or less. The $CO_2$ concentration is usually 1 volume% or more.

The formed body according to the second embodiment, a carbon dioxide sorbent including the formed body, and a carbon dioxide separation/capture device can be suitably applied to the boiler such as the coal combustion boiler, the heavy oil combustion boiler, or the gas combustion boiler, and particularly can be suitably applied to the gas combustion boiler.

The form of the formed body is not particularly limited. Examples of the form of the formed body include various forms such as: particles as a form when the amino-group-containing resin is obtained by a below-described production method and is formed into the formed body; a fiber or nanofiber obtained by performing spinning with a solution produced from the particles; a thread obtained by performing fiber spinning to the fiber or nanofiber; a tow obtained by bundling the threads; a knitted/woven fabric or nonwoven fabric produced from the threads. In particular, the formed body preferably includes the particles. Also, the formed body preferably includes the fiber.

Here, the formed body preferably includes a plurality of fibrillated fibers as the fiber. Each of the fibrillated fibers can be produced by beating the fiber obtained by performing spinning with the solution produced from the particles. In the present specification, the term "fibrillation" means that the substantially circular shape, i.e., the cross section, of the fiber is broken to result in a broad fiber diameter and a frayed shape of the fiber. When beaten or the like, the fiber diameter of the fiber included in the formed body is in a wide range, and is preferably 0.01 μm or more and 100 μm or less, for example. The fiber diameter is more preferably 0.05 μm or more and 50 μm or less. The fiber length of the fiber included in the formed body is not particularly limited, but is preferably 2 mm or more, and is more preferably 5 mm or more. When the fiber length is 2 mm or more, productivity at the time of forming the formed body into a sheet becomes excellent.

<Amino-Group-Containing Resin>

The formed body is the formed body of the amino-group-containing resin as described above. The amino-group-containing resin contains amino groups as functional groups functioning to sorb $CO_2$. The amino-group-containing resin preferably contains amino groups via a crosslinking structure in order to maintain shape stability at the time of water absorption/adsorption or moisture absorption/adsorption. The crosslinking structure should not be particularly limited as long as it does not adversely affect the $CO_2$ sorption ability intended in the present invention and the performance and quality of the product utilizing the $CO_2$ sorption ability, and may be any crosslinking structure such as a crosslink by covalent bond, a crosslink by ionic bond, a crosslink by coordination bond, a crosslink by polymer-molecular interaction or crystal structure. The amino groups contained in the amino-group-containing resin may be any of primary, secondary and tertiary amino groups. However, the amino groups contained in the amino-group-containing resin preferably include both or either of the primary and secondary amino groups as a main component in order to effectively exhibit the $CO_2$ sorption ability. Here, the expression "include both or either of the primary and secondary amino groups as a main component" means that 50 mass% or more of the amino groups included in the amino-group-containing resin are both or either of the primary and secondary amino groups.

The amino-group-containing resin is preferably at least one selected from a group consisting of an acrylic-based resin and a cellulose-based resin. Thus, the formed body having the effects of the present invention can be provided with an excellent yield. The following describes details of the properties of the formed body of the amino-group-containing resin according to the present embodiment, such as the amount of the amino groups, the specific surface area, and the pore volume.

<Amount of Amino Groups per g of Formed Body>

The formed body includes 2.0 mmol or more of the amino groups per g of the formed body. The amount of the amino groups per g of the formed body is preferably 2.5 mmol or more, and is more preferably 3.0 mmol or more. When the amount of the amino groups per g of the formed body is less than 2.0 mmol/g, a sufficient $CO_2$ sorption ability required by the present embodiment may not be obtained. The upper limit of the amount of the amino groups per g of the formed body is not particularly limited, but can be 10.0 mmol/g. When the amount of the amino groups per g of the formed body is more than 10.0 mmol/g, swelling at the time of water absorption/adsorption or moisture absorption/adsorption becomes severe to presumably result in insufficient dimensional stability of the amino-group-containing fiber. When the amount of the amino groups per g of the formed body is more than 10.0 mmol/g, the $CO_2$ sorption ability is saturated and the reaction time required for amine modification at the time of production becomes longer, which may result in significantly decreased productivity.

A method of measuring the amount of the amino groups in the formed body is as follows. First, 3.0 g of sodium chloride is dissolved in 50 mL of ion-exchanged water to obtain an aqueous solution. On the other hand, the formed body, which has been sufficiently dried, is finely cut to obtain a pulverized body, and about 0.2 g of the pulverized body is precisely weighed (X [g]) to obtain a sample. Next, the sample is dispersed in the aqueous solution to obtain a dispersion. A 0.1 mol/L hydrochloric acid standard aqueous solution was dropped to this dispersion, thereby creating a titration curve. Further, the amount of the amino groups can be calculated in accordance with the following formula I, where Y [mL] represents an amount of the 0.1 mol/L hydrochloric acid standard aqueous solution dropped of which has been determined from the titration curve and f [HCl] represents a factor.

$$\text{Amount of amino groups [mmol/g]} = (0.1 \times Y \times f[\text{HCl}])/X \qquad \text{Formula I}$$

<Macropores>

The formed body is provided with the macropores that are based on the pore classification of the IUPAC. That is, the formed body is provided with pores each having a pore size of 50 nm or more as the macropores. The macropores have a specific surface area of 0.1 m$^2$ or more per g of the formed body. Further, the macropores have a pore volume of 0.01 mL or more per g of the formed body. Since the formed body is provided with the macropores with the specific surface area and the pore volume as described above, $CO_2$ can be efficiently sorbed and removed from a gas having a relatively low $CO_2$ concentration under coexistence of moisture. The upper limit of the pore size of the macropore is 1000 nm.

In order to effectively sorb and remove $CO_2$ from a gas, such as a post-combustion exhaust gas, having a relatively low $CO_2$ concentration under coexistence of moisture, the present inventors have sought for a structure of the formed body that can exhibit the $CO_2$ sorption ability in a short period of time under the above-described conditions that moisture is coexisted and the $CO_2$ concentration is relatively low. In general, in a porous material, as the specific surface area and pore volume of the pores are larger, the above-described sorption ability tends to be exhibited in a shorter period of time. On the other hand, since the average pore size becomes smaller as the specific surface area becomes larger, there is a concern that diffusion of a substance is deteriorated or that the sorption ability is decreased due to the pores being closed by foreign substances. In view of the above, it has been found that the balance between the specific surface area and pore volume of the pores and the average pore size of the pores is important for the structure of the formed body for effectively sorbing and removing $CO_2$. As a result of review based on the above finding, the present inventors have reached the formed body in which the macropores that are based on the pore classification of the IUPAC have a specific surface area of 0.1 m$^2$ or more per g of the formed body and have a pore volume of 0.01 mL or more per g of the formed body. According to this formed body, as shown in, for example, Examples described later, the $CO_2$ sorption amount under the above-described conditions can be 2.0 mmol or more per g of the formed body, with the result that $CO_2$ can be effectively sorbed and removed.

In the formed body, the macropores preferably have a specific surface area of 0.5 m$^2$ or more per g of the formed body, and more preferably have a specific surface area of 1 m$^2$ or more per g of the formed body. Further, the macropores preferably have a pore volume of 0.05 mL or more per g of the formed body, and more preferably have a pore volume of 0.1 mL or more per g of the formed body. The upper limit of the specific surface area of the macropores per g of the formed body should not be particularly limited, but is realistically 20 m$^2$ or less. The upper limit of the pore volume of the macropores per g of the formed body should not be particularly limited, but is realistically 2.0 mL or less.

From the viewpoint of increasing the specific surface area and pore volume of the macropores provided in the formed body, the formed body preferably includes the fiber. In particular, the fiber preferably includes the plurality of fibrillated fibers. Thus, a large number of macropores can be formed at the tip portion or the like of the fiber.

Here, the presence of the macropores in the formed body can be identified by producing a sample in the form of a thin piece having a thickness of 50 μm from the formed body by an appropriate method and observing the sample with a scanning electron microscope (SEM) at a magnification of 2000 times.

The specific surface area and pore volume of the macropores in the formed body can be determined based on values measured in accordance with mercury porosimetry (ISO15901-1). Specifically, first, the formed body is finely pulverized in advance to a size suitable for measurement and is pretreated at 70°C for 1 hour, thereby preparing about 30 mg of the sample. Next, a mercury pressure in a range of $4.14 \times 10^{-2}$ to $4.14 \times 10^{2}$ MPa is introduced to the sample using a pore distribution measurement device (trade name: "MICROMERITICS Auto Pore IV" provided by Shimadzu Corporation), and the pore distribution of the sample is specified from the pressure and a press fitting amount at the time of the introduction. Further, based on the pore distribution of the sample, the specific surface area and pore volume of the pores each having a pore size of 50 nm or more and corresponding to the macropores are calculated, and can be determined as the specific surface area and pore volume of the macropores in the formed body.

<Saturated Moisture Absorption/Adsorption Ratio>

In the formed body, the saturated moisture absorption/adsorption ratio at 20°C and 90% relative humidity is preferably 20 mass% or more. Thus, $CO_2$ can be effectively sorbed and removed from a gas including moisture in a saturated state and having a relatively low $CO_2$ concentration, such as a post-combustion exhaust gas. In the formed body, the saturated moisture absorption/adsorption ratio at 20°C and 90% relative humidity is more preferably 25 mass% or more. The upper limit of the saturated moisture absorption/adsorption ratio at 20°C and 90% relative humidity is not particularly limited, but is, for example, 60 mass% or less.

The saturated moisture absorption/adsorption ratio of the formed body at 20°C and 90% relative humidity (hereinafter, also referred to as "90% RH") can be determined by the following method. That is, first, the formed body sufficiently dried is obtained, and about 0.2 g of the sample is precisely weighed from the formed body ($W_{d1}$ [g]). Next, the sample is left for 24 hours in an atmosphere of 20°C and 90% RH. The mass of the sample having reached the moisture absorption/adsorption saturation in this way is measured ($W_{w1}$ [g]). In view of the result of the above measurement, the saturated moisture absorption/adsorption ratio of the sample at 20°C and 90% RH can be calculated based on the following formula II.

Saturated moisture absorption/adsorption ratio [%] at 20°C and 90% RH = $(W_{w1}-W_{d1})/W_{d1} \times 100$ Formula II
  Formula II

<Method of Producing Formed Body>

The formed body can be obtained by an appropriate method, and can be obtained with a high yield, for example, by a method described below. That is, the formed body having the above-described features such as the amount of the amino groups as well as the macropores with the predetermined specific surface area and pore volume can be produced by simultaneously introducing the crosslinking structure and the amino groups into an intermediate (such as an acrylonitrile-based polymer (AN-based polymer) described later) for obtaining the amino-group-containing resin. In particular, the simultaneous introduction of the crosslinking structure and the amino groups can be achieved by treating the intermediate with the amino-group-containing organic compound having the structure in which the total number of amino groups in one molecule is 3 or more, the number of primary amino groups is 2 or more, and the amino groups are bonded by an alkylene group in which the number of carbon atoms is 2 or more.

As described above, the amino-group-containing resin is preferably at least one selected from the group consisting of the acrylic-based resin and the cellulose-based resin. When the amino-group-containing resin is the acrylic-based resin, the intermediate for obtaining the amino-group-containing resin should not be particularly limited as long as the nitrile groups are contained therein. Examples of the intermediate include polyester, polyamide, polyimide, and a vinyl-based polymer, each of which has the nitrile groups. As the intermediate, an acrylonitrile-based polymer (AN-based polymer) is particularly preferable because the nitrile groups can be efficiently contained therein and the amount of the nitrile groups can also be readily adjusted. The AN-based polymer is preferably either homopolymer of acrylonitrile or a copolymer of acrylonitrile and another monomer. When the AN-based polymer is the copolymer of acrylonitrile and another monomer, an AN copolymerization ratio can be preferably 50 mass% or more, more preferably 75 mass% or more, and further preferably 85 mass% or more from the viewpoint of increasing the amount of the amino groups in the resin.

When the AN-based polymer is the copolymer of acrylonitrile and another monomer, a vinyl compound is preferable as the monomer that can be copolymerized with acrylonitrile. When the AN-based polymer is the copolymer of acrylonitrile and another monomer, one vinyl compound may be solely copolymerized with acrylonitrile, or two or more vinyl compounds may be copolymerized with acrylonitrile. Representative examples of the other monomer include well-known monomers, such as: carboxylic-acid-containing monomers such as (meth)acrylic acid, itaconic acid, and salts thereof; monomers such as (meth)acrylic acid esters, (meth)acrylamide, or N-alkyl-substituted substances thereof; vinyl esters such as vinyl acetate and vinyl propionate; vinyl halides or vinylidenes such as vinyl chloride, vinyl bromide, and vinylidene chloride; unsaturated sulfonic acids such as vinyl sulfonic acid, allyl sulfonic acid, methallyl sulfonic acid, and p-styrene sulfonic acid or salts thereof; and aromatic vinyl monomers such as styrene and divinylbenzene.

When the amino-group-containing resin is the cellulose-based resin, examples of the intermediate for obtaining the amino-group-containing resin include cellulose, glucosamine, and the like. Specific examples of the cellulose-based resin include cellulose, a cellulose derivative such as cellulose acetate, chitin, and chitosan. Hereinafter, in an example in which the AN-based polymer is used as the intermediate for obtaining the amino-group-containing resin, a production method of producing the formed body of the amino-group-containing resin will be described.

First, the AN-based polymer is obtained by performing water-based precipitation polymerization using a monomer mixture containing 50 mass% or more of AN. Next, an undried fiber is obtained by performing wet type or dry/wet type (air gap) spinning from a spinning solution of the AN-based polymer. Then, the undried fiber is subjected to a moisture/heat treatment to obtain an intermediate composed of the AN-based polymer provided with the above-described macropores having the specific surface area and the pore volume. The intermediate is in the form of, for example, a fiber or particles. Thereafter, remaining nitrile groups in the intermediate of the AN-based polymer are reacted with the amino-group-containing organic compound having the structure in which the total number of amino groups in one molecule is 3 or more, the number of primary amino groups is 2 or more, and the amino groups are bonded by an alkylene group in which the number of carbon atoms is 2 or more, thereby producing the amino-group-containing resin.

In the above-described production method, the following method can be employed in order to provide the porosity to the formed body of the amino-group-containing resin. That is, the water content of the undried fiber obtained in the wet type or air gap spinning is preferably 50 to 130 mass% and is more preferably 60 to 120 mass%, and in this state, the undried fiber is subjected to a moisture/heat treatment at preferably 105 to 130°C, more preferably 110 to 125°C. Then, by drying the undried fiber at a temperature equal to or less than that in the moisture/heat treatment, the porosity with the above-described feature of the macropores can be provided to the formed body of the amino-group-containing resin.

Alternatively, the above-described porosity with the feature of the macropores can also be provided to the formed body of the amino-group-containing resin in the following manner: a plurality of spinning solutions can be used to perform composite spinning to attain a form such as a sheath-core type form, a side-by-side type form, a sandwich type form, or a random composite type form so as to obtain an undried fiber, and the undried fiber can be subjected to the same moisture/heat treatment as that in the above-described method. The above-described porosity with the feature of the macropores can also be provided to the formed body of the amino-group-containing resin in the following manner: the wet type or air gap spinning described above is performed using a spinning solution containing an acrylic-based anti-static resin composed of an AN-based polymer and methoxypolyethylene glycol methacrylate or the like so as to obtain an undried fiber, and the undried fiber is subjected to the same moisture/heat treatment as that in the above-described method.

In particular, the formed body of the amino-group-containing resin is preferably in the form of a fiber, and the fiber is preferably fibrillated as described above. For the fibrillation, a conventionally known method can be applied without modification. By using a beating method, a condition for beating, or an AN-based polymer that can be readily beaten, the fiber can be sufficiently finely divided to be sufficiently thin to its central portion after the fibrillation, thereby sufficiently developing the micropores between fine fibers. Thus, the formed body of the amino-group-containing resin having the feature of the specific surface area and pore volume of the macropores as described above can be obtained.

The amino-group-containing organic compound preferably has the structure in which the total number of amino groups in one molecule is 3 or more, the number of primary amino groups is 2 or more, and the amino groups are bonded by an alkylene group in which the number of carbon atoms is 2 or more. According to the amino-group-containing organic compound, the crosslinking structure and the amino groups can be introduced simultaneously in one step. That is, three or more amino groups are present in the amino-group-containing organic compound, and at least two of the amino groups are reacted with the nitrile groups in the AN-based polymer, with the result that the crosslinking structure is formed between the amino-group-containing organic compound and the AN-based polymer. Moreover, the $CO_2$ sorption ability is exhibited in the remaining amino groups not consumed in the crosslinking reaction.

When the total number of amino groups in one molecule is less than 3 in the above amino-group-containing organic compound, all the amino groups are consumed in the crosslinking reaction and the sufficient various performances are less likely to obtained, whereas when the number of primary amino groups is less than 2, the crosslinking structure may be less likely to be introduced. When the amino-group-containing organic compound does not have the structure in which the amino groups are bonded by the alkylene group, electron donation to the amino groups is small to result in insufficient basicity, with the result that a sufficient $CO_2$ sorption ability may not be obtained. Therefore, from the viewpoint of the electron donation to the amino groups, the number of carbon atoms of the alkylene group that bonds the amino groups has to be at least 2 or more.

Specific examples of such an amino-group-containing organic compound include diethylenetriamine, 4-methyldiethylenetriamine, triethylenetetramine, 4-methyltriethylenetetramine, 4,7-dimethyltriethylenetetramine, tetraethylenepentamine, 4-methyltetraethylenepentamine, 7-methyltetraethylenepentamine, 4,7-dimethyltetraethylenepentamine, 4,10-dimethyltetraethylenepentamine, 4,7,10-trimethyltetraethylenepentamine, pentaethylenehexamine, 3,3'-imino-

bis(propylamine), N-methyl-3,3'-iminobis(propylamine), lauryliminobispropylamine, N,N'-bis(3-aminopropyl)ethylenediamine, N,N'-bis(3-aminopropyl)-1,3-butylenediamine, N,N'-bis(3-aminopropyl)-1,4-butylenediamine, 1,4-bis(3-aminoethyl)piperazine, 1,4-bis(3-aminopropyl)piperazine, and polyamines such as polyethyleneimine and polyvinylamine.

Particularly, as the above-described amino-group-containing organic compound, an amino-group-containing organic compound in which the primary amino groups are 40% or more of the total number of amino groups is preferable, such as diethylenetriamine, 4-methyldiethylenetriamine, triethylenetetramine, 4-methyltriethylenetetramine, 4,7-dimethyltriethylenetetramine, tetraethylenepentamine, 4-methyltetraethylenepentamine, 7-methyltetraethylenepentamine, 4,7-dimethyltetraethylenepentamine, 4,10-dimethyltetraethylenepentamine, 4,7,10-trimethyltetraethylenepentamine, pentaethylenehexamine, 3,3'-iminobis(propylamine), N-methyl-3,3'-iminobis(propylamine), lauryliminobispropylamine, N,N'-bis(3-aminopropyl)ethylenediamine, N,N'-bis(3-aminopropyl)-1,3-butylenediamine, or N,N'-bis(3-aminopropyl)-1,4-butylenediamine.

The introduction of the crosslinking structure into the AN-based polymer can also be performed by a method other than the above-described method. Examples thereof include a post-crosslinking method in which the AN-based polymer is obtained and the crosslinking structure is then introduced by chemical reaction or physical energy; and the like. The chemical post-crosslinking method for the AN-based polymer is preferable in the following point: since a strong crosslink can be introduced by covalent bond, the crosslinking structure is less susceptible to physical and chemical modifications due to water absorption/adsorption, moisture absorption/adsorption, and the like.

Examples of the post-crosslinking method include a post-crosslinking method in which the nitrile groups in the AN-based polymer in which the content of the vinyl monomer having the nitrile groups is 50 mass% or more is reacted with a hydrazine-based compound or formaldehyde. Particularly, the method employing the hydrazine-based compound is preferable due to the following reason: the method can contribute to improvement of the various performances such as the moisture absorption/adsorption performance and the $CO_2$ sorption ability because it is stable with respect to an acid and an alkali and the crosslinking structure formed is hydrophilic.

The post-crosslinking method employing the hydrazine-based compound should not be particularly limited as long as an intended crosslinking structure can be obtained, and can be appropriately selected in accordance with various conditions such as the physical properties of the AN-based polymer, the concentration of the hydrazine-based compound, a solvent used, a reaction time, and a reaction temperature. Among them, the reaction temperature is preferably 50 to 150°C, and is more preferably 80 to 120°C. Examples of the hydrazine-based compound include hydrazine salts such as hydrazine hydrate, hydrazine sulfate, hydrazine hydrochloride, hydrazine nitrate, and hydrazine carbonate; and hydrazine derivatives such as ethylenediamine, guanidine sulfate, guanidine hydrochloride, guanidine nitrate, guanidine phosphate, and melamine.

[Carbon Dioxide Sorbent]

The carbon dioxide sorbent according to the present embodiment includes the above-described formed body. Thus, the carbon dioxide sorbent can efficiently sorb and remove $CO_2$ from a gas having a relatively low $CO_2$ concentration under coexistence of moisture, such as a post-combustion exhaust gas. Examples of the shape of the appearance of the carbon dioxide sorbent include a fine particle shape, a powdery shape, a thread shape, a yarn shape, a filament shape, a woven fabric shape, a knitted fabric shape, a nonwoven fabric shape, a paper shape, a sheet shape, a monolith shape, a layered body shape, and a cotton-like body shape. In particular, the carbon dioxide sorbent preferably has the sheet shape or the monolith shape. Further, an outer coating can be provided to the above-described shape in the carbon dioxide sorbent. The carbon dioxide sorbent may be constituted of the formed body solely, or may be constituted of a combination of the formed body with another functional resin, an activated carbon resin or fiber, a general natural or synthetic fiber, or the like.

[Carbon Dioxide Separation/Capture Device]

A carbon dioxide separation/capture device according to the present embodiment includes the carbon dioxide sorbent. Thus, the carbon dioxide separation/capture device can efficiently sorb and remove $CO_2$ from a gas having a relatively low $CO_2$ concentration under coexistence of moisture, such as a post-combustion exhaust gas. $CO_2$ can be sorbed and captured in the carbon dioxide sorbent by applying the carbon dioxide sorbent to a functional portion in a housing of the carbon dioxide separation/capture device. The carbon dioxide separation/capture device preferably includes: an introduction portion having an introduction port for introducing the gas into the functional portion; and a discharge portion having a discharge port for discharging, to the outside of the housing, the gas from which $CO_2$ has been removed by the sorption of $CO_2$ in the functional portion. Moreover, the functional portion preferably include: an introduction portion having an introduction port for introducing a renewing gas or steam for renewing the carbon dioxide sorbent in which $CO_2$ has been sorbed; and a discharge portion having a discharge port for discharging, to the outside of the housing, the gas in which $CO_2$ is concentrated by desorbing $CO_2$ in the functional portion. The carbon dioxide separation/capture device can be preferably applied as: a gas treatment device having the carbon dioxide sorbent; a heat cycle device having the carbon dioxide sorbent as a sorbent core; a honeycomb rotor type adsorption device in which the carbon dioxide sorbent is formed into a honeycomb rotor; a cylinder type adsorption device in which the carbon dioxide sorbent is formed into a honeycomb layered body and the honeycomb layered body is disposed in the form of a cylinder and is rotated about a cylinder axis; a batch type adsorption device in which the carbon dioxide sorbent is provided in each of two or more tanks; and the like.

[Method of Using Carbon Dioxide Sorbent]

A method of using the carbon dioxide sorbent according to the present embodiment includes: a step (preparation step) of preparing the carbon dioxide sorbent; and a step ($CO_2$ sorption step) of sorbing the carbon dioxide to the carbon dioxide sorbent under an environment in which carbon dioxide and moisture coexist. In the $CO_2$ sorption step, the concentration of the carbon dioxide in the environment may be relatively low, for example, 20 volume% or less, preferably 15 volume% or less, and more preferably 10 volume% or less. The method of using the carbon dioxide sorbent preferably further includes a step ($CO_2$ desorption step) of desorbing the $CO_2$ from the carbon dioxide sorbent in which the $CO_2$ has been sorbed so as to renew the carbon dioxide sorbent.

In the preparation step, for example, the carbon dioxide sorbent or the carbon dioxide separation/capture device including the carbon dioxide sorbent is prepared. Since details of the carbon dioxide sorbent and the carbon dioxide separation/capture device are as described above, the same explanation will not be described. In the $CO_2$ sorption step, a gas having a relatively low $CO_2$ concentration under coexistence of moisture, such as a post-combustion exhaust gas, is introduced into the functional portion to which the carbon dioxide sorbent is applied, for example, through the introduction portion of the carbon dioxide separation/capture device. Further, $CO_2$ in the gas is sorbed in the functional portion, and then the gas from which $CO_2$ has been removed is discharged from the functional portion to the outside of the housing through the discharge portion. As described above, according to the method of using the carbon dioxide sorbent in the present embodiment, $CO_2$ can be efficiently sorbed and removed from the gas having a relatively low $CO_2$ concentration under coexistence of moisture, such as a post-combustion exhaust gas.

[Third Embodiment]

[Formed Body]

A formed body according to the third embodiment is a formed body of an amino-group-containing resin. The formed body includes 2.0 mmol or more of amino groups per g of the formed body. The formed body is provided with macropores that are based on the pore classification of the International Union of Pure and Applied Chemistry (IUPAC). The macropores have a specific surface area of 0.1 $m^2$ or more per g of the formed body and a pore volume of 0.01 mL or more per g of the formed body. The formed body has a glass transition temperature at the time of moisture absorption/adsorption as observed using a differential scanning calorimeter. The formed body does not have a glass transition temperature in an absolute dry state. The formed body having such a feature can sorb and remove $CO_2$ with excellent amine efficiency from a gas having a relatively low $CO_2$ concentration under coexistence of moisture. The "gas having a relatively low $CO_2$ concentration under coexistence of moisture" refers to the same gas as described in the second embodiment. That is, the gas having a relatively low $CO_2$ concentration under coexistence of moisture is Post-Combustion generated from a boiler such as a coal combustion boiler, a heavy oil combustion boiler, or a gas combustion boiler. Therefore, the formed body, a carbon dioxide sorbent including the formed body, and a carbon dioxide separation/capture device according to the third embodiment can be suitably applied to the boiler such as the coal combustion boiler, the heavy oil combustion boiler, and the gas combustion boiler, and particularly can be suitably applied to the gas combustion boiler.

As in the second embodiment, the form of the formed body should not be particularly limited. As with the second embodiment, when the formed body includes a fiber as its form, the fiber preferably includes a plurality of fibrillated fibers. In the description of the third embodiment, the same matters as those of the second embodiment will not be described repeatedly.

<Amino-Group-Containing Resin>

The formed body is the formed body of the amino-group-containing resin as in the second embodiment. The amount of the amino groups and the properties (specific surface area, pore volume, and the like) of the macropores in the formed body of the amino-group-containing resin in the third embodiment are the same as those in the second embodiment. In the description of the third embodiment, the same matters as those of the second embodiment will not be described repeatedly.

In order to effectively sorb and remove $CO_2$ with excellent amine efficiency from a gas, such as a post-combustion exhaust gas, having a relatively low $CO_2$ concentration under coexistence of moisture, the present inventors have sought for a structure of the formed body that contains the amino groups and that can exhibit the $CO_2$ sorption ability in a short period of time under the above-described conditions that moisture is coexisted and the $CO_2$ concentration is relatively low. In general, in a porous material, as the amount of the amino groups introduced into the formed body is larger and the specific surface area and pore volume of the pores is larger, the above-described sorption ability tends to be exhibited in a shorter period of time. On the other hand, since the average pore size becomes smaller as the specific surface area becomes larger, there is a concern that diffusion of a substance is deteriorated or that the above-described sorption ability is decreased due to the pores being closed by foreign substances even when the amount of the introduced amino groups is large. In view of the above, it has been found that in addition to the amount of the amino groups introduced into the formed body, the balance between the specific surface area and pore volume of the pores and the average pore size of the pores is important for the structure of the formed body for sorbing and removing $CO_2$ with excellent amine efficiency. As a result of review based on the above finding, the present inventors have reached the formed body in which the macropores that are based on the pore classification of the IUPAC have a specific surface area of 0.1 $m^2$ or more per g of the formed body and have a pore volume of 0.01 mL or more per g of the formed body. According to this formed body, the amine efficiency (amount of $CO_2$ sorption (mmol/g)/amount of amino group (mmol/g)) can be 0.35 or more as shown in, for example, Examples described later, with the result that $CO_2$ can be sorbed and removed with excellent amine efficiency.

<Glass Transition Temperature at Time of Moisture Absorption/Adsorption>

In the present specification, the expression "glass transition temperature at the time of moisture absorption/adsorption" refers to a glass transition temperature that can be observed when the formed body is in a state in which the formed body absorbs or adsorbs moisture (in other words, when the formed body is not in an absolute dry state). The formed body has no glass transition temperature in the absolute dry state as observed using the differential scanning calorimeter, but has a glass transition temperature at the time of moisture absorption/adsorption as observed using the differential scanning calorimeter. Thus, it is possible to provide a formed body that can sorb and remove $CO_2$ with excellent amine efficiency from a gas having a relatively low $CO_2$ concentration under coexistence of moisture.
In the process of seeking for the structure of the formed body that can sorb and remove $CO_2$ with excellent amine efficiency, the present inventors have found that the amine efficiency is improved when the formed body has such a property that the formed body is plasticized at the time of moisture absorption/adsorption. The property that the formed body is plasticized can be confirmed, for example, in such a manner that the glass transition temperature of the formed body, which has not been observed in the absolute dry state, can be observed at the time of moisture absorption/adsorption. The present inventors have conceived that $CO_2$ can be sorbed and removed with excellent amine efficiency in the formed body which has the technical features such as the macropores and for which the glass transition temperature at the time of moisture absorption/adsorption is observed as shown in the Examples and the like described later, thereby completing the present invention.
In the formed body, the glass transition temperature at the time of moisture absorption/adsorption is preferably 0°C or more and 80°C or less, and is more preferably 20°C or more and 60°C or less.

<Saturated Moisture Absorption/Adsorption Ratio>

In the formed body, the saturated moisture absorption/adsorption ratio at 20°C and 90% relative humidity is preferably 20 mass% or more as in the second embodiment. In the formed body, a preferable saturated moisture absorption/adsorption ratio at 20°C and 90% relative humidity, the upper limit thereof, and a method of measuring the saturated moisture absorption/adsorption ratio at 20°C and 90% relative humidity are the same as those in the second embodiment. In the description of the third embodiment, the same matters as those of the second embodiment will not be described repeatedly.

<Method of Producing Formed Body>

The formed body can be obtained by any method, but can be obtained with a high yield by, for example, the following method. That is, the formed body having the features such as the amount of the amino groups, the macropores with the predetermined specific surface area and pore volume, and the glass transition temperature at the time of moisture absorption/adsorption, can be produced by simultaneously introducing the crosslinking structure and the amino groups into an intermediate (for example, an AN-based polymer or the like described later) for obtaining the amino-group-containing resin in the same manner as in the second embodiment. In particular, the simultaneous introduction of the crosslinking structure and the amino groups can be achieved by treating the intermediate with the amino-group-containing organic compound having the structure in which the total number of amino groups in one molecule is 3 or more, the number of primary amino groups is 2 or more, and the amino groups are bonded by an alkylene group in which the number of carbon atoms is 2 or more. In the description of the third embodiment, the same matters as those of the second embodiment will not be described repeatedly.

In the third embodiment, when the formed body in the form of particles is obtained, in the method of producing the formed body, the AN-based polymer is preferably composed of a copolymer of acrylonitrile and another monomer, and a vinyl compound is preferably used as the other monomer that can be copolymerized with acrylonitrile. In this case, the vinyl compound can function as a crosslinkable monomer when obtaining the intermediate composed of the AN-based polymer. A degree of plasticization at the time of moisture absorption/adsorption when the formed body is in the form of particles can be adjusted by selecting a type of the crosslinkable monomer, controlling an amount of the crosslinkable monomer to be added, and controlling a reaction time. When the AN-based polymer is the copolymer of acrylonitrile and a vinyl compound, an AN copolymerization ratio is preferably 75 mass% or more.

[Carbon Dioxide Sorbent]

The carbon dioxide sorbent according to the third embodiment includes the formed body. Thus, the carbon dioxide sorbent can sorb and remove $CO_2$ with excellent amine efficiency from a gas having a relatively low $CO_2$ concentration under coexistence of moisture, such as a post-combustion exhaust gas. The shape of the appearance of the carbon dioxide sorbent is the same as that in the second embodiment. As with the second embodiment, the carbon dioxide sorbent may be constituted of the formed body solely, or may be constituted of a combination of the formed body with another functional resin, an activated carbon resin or fiber, a general natural or synthetic fiber, or the like.

[Carbon Dioxide Separation/Capture Device]

The carbon dioxide separation/capture device according to the third embodiment includes the carbon dioxide sorbent. Thus, the carbon dioxide separation/capture device can sorb and remove $CO_2$ with excellent amine efficiency from a gas having a relatively low $CO_2$ concentration under coexistence of moisture, such as a post-combustion exhaust gas. The configuration of the carbon dioxide separation/capture device is the same as that in the second embodiment except that the carbon dioxide separation/capture device includes the carbon dioxide sorbent according to the third embodiment. As with the second embodiment, the carbon dioxide separation/capture device can be preferably applied as: a gas treatment device having the carbon dioxide sorbent; a heat cycle device having the carbon dioxide sorbent as a sorbent core; a honeycomb rotor type adsorption device in which the carbon dioxide sorbent is formed into a honeycomb rotor; a cylinder type adsorption device in which the carbon dioxide sorbent is formed into a honeycomb layered body and the honeycomb layered body is disposed in the form of a cylinder and is rotated about a cylinder axis; a batch type adsorption device in which the carbon dioxide sorbent is filled in each of two or more tanks; and the like.

[Method of Using Carbon Dioxide Sorbent]

A method of using the carbon dioxide sorbent according to the third embodiment is the same as that in the second embodiment except that the carbon dioxide sorbent according to the third embodiment is prepared in the preparation step. According to the method of using the carbon dioxide sorbent according to the third embodiment, $CO_2$ can be efficiently sorbed and removed with excellent amine efficiency from a gas having a relatively low $CO_2$ concentration under coexistence of moisture, such as a post-combustion exhaust gas.

Examples

Hereinafter, the present invention will be described more in detail with reference to examples; however, the present invention are not limited by these examples at all. "Parts" and "percentage" used to describe each example and each sample mean parts by mass and mass%, respectively, unless stated otherwise particularly.

[First Example]

Measurement values measured for each example (or each sample) were determined by the following measurement methods.

(1) Amount of Amino Groups (Anion Exchange Capacity)

3.0 g of sodium chloride was dissolved in 50 ml of ion-exchanged water, and about 0.2 g of the sample, which had been cut in advance so as not to hinder stirring and had been sufficiently dried, was precisely weighed (X [g]) and was dispersed therein. A 0.1 mol/L hydrochloric acid standard aqueous solution was dropped to this dispersion, thereby creating a titration curve. Further, an amount of amino groups was calculated in accordance with the following formula, where Y [ml] represents an amount of the 0.1 mol/L hydrochloric acid standard aqueous solution dropped of which had been determined from the titration curve and f [HCl] represents a factor.

$$\text{Amount of amino groups [mmol/g]} = (0.1 \times Y \times f[HCl])/X$$

(2) Method of Confirming Introduction of Crosslink

An amine reaction amount calculated from mass increase of the fiber having been through amine modification was compared with the amount of the amino groups as measured in (1) above, thereby confirming the introduction of the crosslink. It was confirmed that the crosslink was introduced in each of all the examples and all the comparative examples.

(3) Saturated Moisture Absorption/Adsorption Ratio

About 0.2 g of the sample sufficiently dried was precisely weighed ($W_{d1}$ [g]). The sample was left at 20°C under a predetermined relative humidity (65% RH, 90% RH) for 24 hours. The mass of the sample having reached the moisture absorption/adsorption saturation in this way was measured ($W_{w1}$ [g]). In view of the result of the above measurement, the saturated moisture absorption/adsorption ratio at each relative humidity was calculated in accordance with the following formula.

$$\text{Saturated moisture absorption/adsorption ratio [\%]} = (W_{w1}-W_{d1})/W_{d1} \times 100$$

(4) Moisture Absorption/Adsorption Rate

The fiber was opened and was finely cut into a fine dry sample, which was then used as a measurement sample. About 0.2 g of the sample was dried at 100°C for 1 hour using a hot air dryer, and the mass thereof was measured ($W_{d2}$ [g]). Next, the sample was left for 1 minute in a sealed container adjusted to 75% RH by a saturated salt method at a temperature of 20°C, and the mass of the sample having absorbed/adsorbed moisture was measured ($W_{w2}$ [g]). Based on the result of the above, the moisture absorption/adsorption rate was calculated by the following formula.

$$\text{Moisture absorption/adsorption rate (mass\%/min)} = \{(W_{w2}-W_{d2})/W_{d2}\} \times 100$$

(5) Pore Distribution and Specific Surface Area

The fiber was cut into 10 mm in advance and was pretreated at 70°C for 1 hour to obtain a sample, and about 30 mg of the sample was evaluated using MICROMERITICS Auto Pore IV provided by Shimadzu Corporation in a range of a mercury pressure of $4.14 \times 10^{-2}$ to $4.14 \times 10^{2}$ MPa.

(6) Anion Exchange Rate

3.0 g of sodium chloride was dissolved in 50 ml of ion-exchanged water, and about 0.2 g of the sample, which had been cut in advance so as not to hinder stirring and had been sufficiently dried, was precisely weighed and dispersed therein. A 0.1 mol/L hydrochloric acid standard aqueous solution was dropped to this dispersion by an amount to attain semi-neutrality, a change in the pH of the dispersion was measured, and an anion exchange rate was calculated in accordance with the following formula.

Anion exchange rate ($min^{-1}$) = [(pH of dispersion before dropping) - (pH of dispersion 60 seconds after dropping)]

(7) Aldehyde Adsorption Rate

The inside of a 45 L plastic container was adjusted with air at 20°C and 65% RH, and then 50 ppm of acetaldehyde gas was introduced thereinto. 3.0 g of the sample adjusted in humidity at 20°C and 65% RH in advance was put and sealed therein, and a change in acetaldehyde concentration in the plastic container was measured using a portable multi gas monitor GX-6000 provided by RIKEN KEIKI, and an aldehyde adsorption rate was calculated in accordance with the following formula.

Aldehyde adsorption rate (ppm/min) = (remaining acetaldehyde concentration after 50 to 60 seconds)

(8) Acetic Acid Sorption Rate

The same method as in (7) above was performed except that the gas to be adsorbed was changed from acetaldehyde to acetic acid with regard to the aldehyde adsorption rate in (7).

Hereinafter, the fibers produced in the examples and the comparative examples will be described in detail.

(Example 1)

A spinning solution (I), which is composed of an acrylonitrile copolymer composed of acrylonitrile, methyl acrylate, and sodium methallylsulfonate and having an acrylonitrile content ratio of 90%, and a spinning solution (II), which is composed of an acrylonitrile copolymer composed of acrylonitrile, methyl acrylate, and sodium methallylsulfonate and having an acrylonitrile content ratio of 88%, were supplied to an ISG Mixer at a ratio of 1:1 and were subjected to multi-layer mixing, and wet type spinning was performed. Here, an aqueous solution of sodium rhodanate was used as a solvent for the acrylonitrile copolymer. For a coagulation liquid, an aqueous solution of sodium rhodanate at a concentration of 12% was used at 1.5°C. Then, cleaning with water and thermal stretching was performed, and an obtained fiber was subjected to steam treatment at 115°C in a relaxed state without drying, and was further dried at 110°C for 15 minutes, thereby obtaining a random composite type porous acrylic fiber 1. The fiber had a specific surface area of 19 $m^2$/g and an average pore size of 32 nm.

200 parts of porous acrylic fiber 1 obtained, 600 parts of diethylenetriamine, and 1400 parts of water were introduced into an autoclave, were reacted at 130°C for 3 hours, and were subjected to suction filtration, cleaning with water, and drying, thereby obtaining an amino-group-containing fiber of Example 1. The properties of the fiber are shown in Table 1.

(Example 2)

200 parts of porous acrylic fiber 1 of Example 1, 600 parts of diethylenetriamine, and 1400 parts of water were introduced into an autoclave, were reacted at 130°C for 1 hour, and were subjected to suction filtration, cleaning with water, and drying, thereby obtaining an amino-group-containing fiber of Example 2. The properties of the fiber are shown in Table 1.

(Example 3)

200 parts of porous acrylic fiber 1 of Example 1, 300 parts of hydrazine, and 1700 parts of water were introduced into an autoclave, were reacted at 130°C for 1 hour, and were subjected to suction filtration, cleaning with water, and drying, thereby obtaining a crosslinked fiber. 200 parts of the crosslinked fiber, 600 parts of diethylenetriamine, and 1400 parts of water were introduced into an autoclave, were reacted at 130°C for 3 hours, and were subjected to suction filtration, cleaning with water, and drying, thereby obtaining an amino-group-containing fiber of Example 3. The properties of the fiber are shown in Table 1.

(Example 4)

A spinning solution (III) was prepared by dispersing, in water, an acrylic-based hydrophilic resin composed of acrylonitrile and methoxypolyethylene glycol (30 mol) methacrylate and having an acrylonitrile content ratio of 30%, and mixing it with the above-described spinning solution (I) by a high shear mixer, and wet type spinning was performed. Here, the acrylic-based hydrophilic resin was adjusted to be 2 parts with respect to 98 parts of the acrylonitrile copolymer of the spinning solution (I). For a coagulation liquid, an aqueous solution of sodium rhodanate at a concentration of 12% was used at 5°C. Then, cleaning with water and thermal stretching were performed, and an obtained fiber was subjected to steam treatment at 115°C in a relaxed state without drying, and was further dried at 110°C for 10 minutes, thereby obtaining a porous acrylic fiber 2. The fiber had a specific surface area of 30 $m^2$/g and an average pore size of 15 nm.

200 parts of porous acrylic fiber 2 obtained, 600 parts of diethylenetriamine, and 1400 parts of water were introduced into an autoclave, were reacted at 130°C for 3 hours, and were subjected to suction filtration, cleaning with water, and drying, thereby obtaining an amino-group-containing fiber of Example 4. The properties of the fiber are shown in Table 1.

(Example 5)

200 parts of porous acrylic fiber 2 of Example 4, 1200 parts of diethylenetriamine, and 800 parts of water were introduced into an autoclave, were reacted at 130°C for 3 hours, and were subjected to suction filtration, cleaning with water, and drying, thereby obtaining an amino-group-containing fiber of Example 5. The properties of the fiber are shown in Table 1.

(Example 6)

A spinning solution (IV) composed of an acrylonitrile homopolymer was subjected to air gap spinning. For a coagulation liquid, an aqueous solution of sodium rhodanate at a concentration of 20% was used at 10°C. Then, cleaning with water and thermal stretching were performed, and an obtained fiber was thermally set at 215°C for 3 minutes under tension, thereby obtaining a homoacrylic fiber 1. Homoacrylic fiber 1 was cut into 5 mm, and a water-only slurry at a concentration of 2% was applied to a refiner so as to perform fibrillation, thereby obtaining fibrillated homoacrylic fibers. The fibrillated homoacrylic fibers had a specific surface area of 35 $m^2$/g and an average pore size of 500 nm.
200 parts of the fibrillated homoacrylic fibers obtained, 1200 parts of diethylenetriamine and 800 parts of water were introduced into an autoclave, were reacted at 130°C for 3 hours, and were subjected to suction filtration, cleaning with water, and drying, thereby obtaining an amino-group-containing fiber of Example 6. The properties of the fiber are shown in Table 1.

(Comparative Example 1)

A spinning solution (V) composed of an acrylonitrile homopolymer was subjected to wet type spinning. For a coagulation liquid, an aqueous solution of sodium rhodanate at a concentration of 12% was used at 5°C. Then, cleaning with water, thermal stretching, and heat treatment were performed to obtain a homoacrylic fiber 2. The fiber had a specific surface area of less than 1 $m^2$/g and an average pore size of 1000 nm or more. 200 parts of homoacrylic fiber 2 obtained, 1200 parts of diethylenetriamine, and 800 parts of water were introduced into an autoclave, were reacted at 130°C for 1 hour, and were subjected to suction filtration, cleaning with water, and drying, thereby obtaining an amino-group-containing fiber of Comparative Example 1. The properties of the fiber are shown in Table 1.

(Comparative Example 2)

200 parts of homoacrylic fiber 2 of Comparative Example 1, 1200 parts of diethylenetriamine, and 800 parts of water were introduced into an autoclave, were reacted at 130°C for 3 hours, and were subjected to suction filtration, cleaning with water, and drying, thereby obtaining an amino-group-containing fiber of Comparative Example 2. The properties of the fiber are shown in Table 1.

(Comparative Example 3)

The spinning solution (I) was subjected to wet type spinning. For a coagulation liquid, an aqueous solution of sodium rhodanate at a concentration of 15% was used at -2°C. Next, cleaning with water, thermal stretching, and heat treatment were performed, thereby obtaining an acrylic fiber 1. The fiber had a specific surface area of less than 1 $m^2$/g and an average pore size of 1000 nm or more. 200 parts of acrylic fiber 1 obtained, 600 parts of diethylenetriamine, and 1400 parts of water were introduced into an autoclave, were reacted at 130°C for 3 hours, and were subjected to suction filtration, cleaning with water, and drying, thereby obtaining an amino-group-containing fiber of Comparative Example 3. The properties of the fiber are shown in Table 1.

(Comparative Example 4)

200 parts of homoacrylic fiber 1 of Example 6, 1200 parts of diethylenetriamine, and 800 parts of water were introduced into an autoclave, were reacted at 130°C for 8 hours, and were subjected to suction filtration, cleaning with water, and drying, thereby obtaining an amino-group-containing fiber of Comparative Example 4. The properties of the fiber are shown in Table 1.

(Reference Example 1)

Granular A-type silica gel (provided by Hayashi Pure Chemical) was ground in a mortar into a powder form, and moisture absorption/adsorption performance thereof was evaluated. The saturated moisture absorption/adsorption ratio was 36% at 20°C×65% RH and was 39% at 20°C×90% RH. It was confirmed that the moisture absorption/adsorption rate was comparable to that of each of the comparative examples and was lower than that of each of the examples.

(Reference Example 2)

An anion exchange capacity and an anion exchange rate were evaluated for a granular weakly-basic anion exchange resin (purchased from Fujifilm Wako Pure Chemical Corporation). The anion exchange capacity was 1.6 mmol/g, and the ion exchange rate was considerably low in the table, and was confirmed to be lower than that of each of the examples.

[Table 1]

Table. 1

| | Ex. 1 | Ex. 2 | Ex. 3 | Ex. 4 | Ex. 5 | Ex. 6 | Comp. Ex. 1 | Comp. Ex 2 | Comp. Ex. 3 | Comp. Ex. 4 |
|---|---|---|---|---|---|---|---|---|---|---|
| Shape | Fiber | Fiber | Fiber | Fiber | Fiber | Pulp | Fiber | Fiber | Fiber | Fiber |
| Crosslinking in Advance | N/A | N/A | Applied | N/A | N/A | N/A | N/A | N/A | N/A | N/A |
| Reaction Temperature [°C] | 130 | 130 | 130 | 130 | 130 | 130 | 130 | 130 | 130 | 130 |
| Reaction Time [hr] | 3 | 1 | 3 | 3 | 3 | 3 | 1 | 3 | 3 | 8 |
| Amino Group Amount (Anion Exchange Capacity) [mmol/g] | 3.7 | 2.9 | 4.1 | 3.7 | 8.0 | 6.1 | Less Than 0.1 | 1.1 | 2.9 | 8.1 |
| Pore Maintaining Ratio [%] | 79% | 89% | 79% | 53% | 37% | 40% | --- | --- | --- | --- |
| Specific Surface Area [m$^2$/g] | 15 | 17 | 15 | 16 | 11 | 14 | Less Than 1 | Less Than 1 | Less Than 1 | Less Than 1 |
| Average Pore Size [nm] | 16 | 21 | 23 | 22 | 24 | 1,000 | 1,000 or More | 1,000 or More | 1,000 or More | 1,000 or More |

As understandable from Table 1, in each of Examples 1 to 6, a sufficient amount of the amino groups could be introduced by the reaction in a relatively short period of time, whereas in each of Comparative Examples 1 to 4, it was difficult to introduce the amino groups in a short period of time, and in order to introduce a sufficient amount of the amino groups, the reaction time had to be long. This is presumably due to the following reason: the fiber composed of the AN-based polymer, which is the precursor in each of Comparative Examples 1 to 4, did not have an excellent porosity to result in poor diffusion of the amino-group-containing organic compound serving as a reactive substrate, and the reaction rate became slow due to substance transfer rate limitation.

[Table 2]

Table. 2

| | Ex. 1 | Ex. 2 | Ex. 3 | Ex. 4 | Ex. 5 | Ex. 6 | Comp. Ex. 1 | Comp. Ex. 2 | Comp. Ex. 3 | Comp. Ex. 4 | Ref. Ex. 1 |
|---|---|---|---|---|---|---|---|---|---|---|---|
| 25°C50%RH Saturated Moisture Absorption/ Adsorption Ratio [%] | 21 | 18 | 20 | 21 | 26 | 20 | 2 | 4 | 20 | 23 | 28 |
| 25°C65%RH Saturated Moisture Absorption/ Adsorption Ratio [%] | 29 | 24 | 27 | 29 | 35 | 27 | 2 | 5 | 27 | 31 | 36 |
| 20°C90%RH Saturated Moisture Absorption/ Adsorption Ratio [%] | 55 | 47 | 52 | 55 | 69 | 53 | 4 | 10 | 53 | 61 | 39 |
| Moisture Absorption/ Adsorption Rate [mg-$H_2O$/g-Polymer] | 23 | 20 | 30 | 23 | 22 | 28 | 1 | 11 | 13 | 11 | 16 |

As understandable from Table 2, in each of Examples 1 to 6, both a high saturated moisture absorption/adsorption ratio and a high moisture absorption/adsorption rate were achieved, whereas in each of Comparative Examples 1 to 4, the saturated moisture absorption/adsorption ratio was insufficient in the case where a sufficient amount of the amino groups was not introduced, and the moisture absorption/adsorption rate is not comparable to that in each of the Examples as a whole. This is presumably due to the following reason: each of Examples 1 to 6 has the excellent porosity, and adsorption and absorption of water molecules to the solid surface were promoted to improve the moisture absorption/adsorption rate. Moreover, in view of Table 2, it was found that each of Examples 1 to 6 has a higher moisture absorption/adsorption rate than that in Reference Example 1 using the A-type silica gel known as a general moisture absorbent/adsorbent, and it was indicated that the moisture absorption/adsorption performance is high.

[Table 3]

Table. 3

| | Ex. 1 | Ex. 2 | Ex. 3 | Ex. 4 | Ex. 5 | Ex. 6 | Comp. Ex. 1 | Comp. Ex. 2 | Comp. Ex. 3 | Comp. Ex. 4 | Ref. Ex. 2 |
|---|---|---|---|---|---|---|---|---|---|---|---|
| Shape | Fiber | Fiber | Fiber | Pulp | Fiber | Pulp | Fiber | Fiber | Fiber | Fiber | Bead |
| Amino Group Amount (Anion Exchange Capacity) [mmol/g] | 3.7 | 2.9 | 4.1 | 3.7 | 8.0 | 6.1 | Less Than 0.1 | 1.1 | 2.9 | 8.1 | 1.6 |

(continued)

| | Ex. 1 | Ex. 2 | Ex. 3 | Ex. 4 | Ex. 5 | Ex. 6 | Comp. Ex. 1 | Comp. Ex. 2 | Comp. Ex. 3 | Comp. Ex. 4 | Ref. Ex. 2 |
|---|---|---|---|---|---|---|---|---|---|---|---|
| Anion Exchange Rate [/min] | 5.29 | 3.52 | 2.81 | 5.04 | 4.48 | 5.21 | 0.01 | 0.04 | 1.94 | 1.84 | 0.06 |

As understandable from Table 3, the anion exchange rate in each of Examples 1 to 6 is also higher than that in each of Comparative Examples 1 to 4. This is presumably due to the following reason: since each of Examples 1 to 6 has a high specific surface area, ion migration at the solid surface was promoted. Moreover, also in comparison with Reference Example 2 generally used as a weakly-basic anion exchange resin, it is found that each of Examples 1 to 6 have a sufficiently high anion exchange rate, and it is considered that each of Examples 1 to 6 is sufficiently practically used as an anion exchange resin.

[Table 4]

Table. 4

| | Ex. 1 | Ex. 2 | Ex. 3 | Ex. 4 | Ex. 5 | Ex. 6 | Comp. Ex. 1 | Comp. Ex. 2 | Comp. Ex. 3 | Comp. Ex. 4 |
|---|---|---|---|---|---|---|---|---|---|---|
| Amino Group Amount (Anion Exchange Capacity) [mmol/g] | 3.7 | 2.9 | 4.1 | 3.7 | 8.0 | 6.1 | Less Than 0.1 | 1.1 | 2.9 | 8.1 |
| Aldehyde Adsorption Rate [ppm/min] | 12.1 | 11.2 | 11.7 | 10.6 | 14.4 | 8.2 | 0.3 | 5.4 | 5.1 | 5.8 |
| Acetate Adsorption Rate [ppm/min] | 24.5 | 21.8 | 22.2 | 20.4 | 48.6 | 19.6 | 0.3 | 3.6 | 5.0 | 18.1 |

As understood from Table 4, the adsorption rates for aldehyde and acetic acid in each of Examples 1 to 6 are also higher than those in each of Comparative Examples 1 to 4. This is presumably due to the following reason: since each of Examples 1 to 6 has the high specific surface area, gas adsorption at the solid surface was promoted and the absorption and diffusion to the inside of the polymer matrix were rapidly performed.

(Review)

In this way, it is possible to provide an amino-group-containing fiber that can exhibit the various performances such as the moisture absorption/adsorption performance, the anion exchange performance, and the gas adsorption performance in a short period of time and that allows for high productivity, thus greatly contributing to the industry.

[Second Example]

In the following description, samples 21 to 23 are examples of the present disclosure, and samples 2A to 2C are comparative examples. Measurement values measured for each sample in the present example were determined by the following measurement methods.

<Amount of Amino Groups per g of Formed Body>

First, an aqueous solution was prepared by dissolving 3.0 g of sodium chloride in 50 mL of ion-exchanged water. On the other hand, each of the samples (samples 21 to 23 and samples 2A to 2C), which had been sufficiently dried, was finely cut to obtain a pulverized body, and about 0.2 g of the pulverized body was precisely weighed (X [g]), thereby obtaining a measurement sample. Next, the measurement sample was dispersed in the aqueous solution to obtain a dispersion. A 0.1 mol/L hydrochloric acid standard aqueous solution was dropped to this dispersion, thereby creating a titration curve. Further, the amount of the amino groups was calculated in accordance with the following formula I, where Y [mL] represents an amount of the 0.1 mol/L hydrochloric acid standard aqueous solution dropped of which had been determined from the titration curve and f [HCl] represents a factor.

$$\text{Amount of amino groups [mmol/g]} = (0.1 \times Y \times f[\text{HCl}])/X \qquad \text{Formula I}$$

<Saturated Moisture Absorption/Adsorption Ratio at 20°C and 90% RH>

About 0.2 g of each of the samples, which had been sufficiently dried, was precisely weighed ($W_{d1}$ [g]). Further, each of the samples was left at 20°C and 90% RH for 24 hours to reach moisture absorption/adsorption saturation, and then the mass of each of the samples was measured ($W_{w1}$ [g]). From the above measurement result, the saturated moisture absorption/adsorption ratio at 20°C and 90% RH in each of the samples can be calculated based on the following formula II.

Saturated moisture absorption/adsorption ratio [%] at 20°C and 90% RH = $(W_{w1}-W_{d1})/W_{d1} \times 100$ Formula II   Formula II

<Pore Volume, Specific Surface Area and Average Pore Size>

About 30 mg of a measurement sample was prepared by pulverizing each sample in advance into an appropriate size suitable for measurement and drying it by heat treatment at 70°C for 1 hour. Next, a mercury pressure in a range of $4.14 \times 10^{-2}$ to $4.14 \times 10^{2}$ MPa was introduced to the measurement sample using a pore distribution measurement device (trade name: "MICROMERITICS Auto Pore IV" provided by Shimadzu Corporation), and the pore distribution of the measurement sample was specified from the pressure and a press fitting amount at the time of the introduction. Further, based on the pore distribution of the measurement sample, the specific surface area and pore volume of the pores each having a pore size of 2 nm or more and less than 50 nm and corresponding to the mesopores that are based on the pore classification of the IUPAC and the specific surface area and pore volume of the pores each having a pore size of 50 nm or more and corresponding to the macropores were calculated, and these were determined as the specific surface areas ($[m^2/g]$) and the pore volumes ($[mL/g]$) of the mesopores and the macropores in each sample.
It should be noted that an analysis range for the mercury pressure is as follows.

Mesopores: $2.90 \times 10^{1}$ to $4.14 \times 10^{2}$ MPa
Macropores: $1.46 \times 10^{0}$ to $2.90 \times 10^{1}$ MPa

<$CO_2$ Sorption>

Each sample was introduced into a measurement sample cell, a gas having 95 volume% of nitrogen, 5 volume% of carbon dioxide, and 90% relative humidity was introduced into the measurement sample cell by using a gas absorption/adsorption/desorption amount measurement device (trade name: "BELCAT II" provided by MicrotracBEL), and a gas composition at the outlet of the measurement sample cell was analyzed by mass spectrum, thereby determining a $CO_2$ sorption amount ($[mmol/g]$) in each sample.

<Production of Each Sample>

(Sample 21)

A monomer mixture liquid composed of 37.5 parts of acrylonitrile and 12.5 parts of divinylbenzene, 50 parts of cyclohexane, and an oxidizing agent aqueous solution in which 4 parts of ammonium persulfate was dissolved in 330 parts of water were added to a polymerization tank, and a temperature thereof was increased to 65°C to perform precipitation polymerization for 4 hours, thereby obtaining a polymer dispersion. The polymer dispersion was subjected to centrifugal dehydration, heating, and drying, thereby obtaining porous acrylonitrile-based polymer particles. The average particle size of the polymer particles was 32 μm. Next, 200 parts of the polymer particles, 1200 parts of diethylenetriamine, and 800 parts of water were introduced into an autoclave, were reacted at 130°C for 12 hours, and were subjected to suction filtration, cleaning with water, and drying, thereby obtaining a formed body. The formed body was in the form of particles (fine particles), and the average particle size of the formed body was 36 μm. Further, a carbon dioxide sorbent of sample 21 composed of the formed body was produced. The properties of sample 21 are shown in Table 5.

(Sample 22)

A spinning solution (VI) composed of an acrylonitrile homopolymer was obtained, and the spinning solution (VI) was subjected to air gap spinning. For a coagulation liquid, an aqueous solution of sodium rhodanate at a concentration of 20% was used at 10°C. Further, a fibrous material obtained by the air gap spinning was subjected to cleaning with water and thermal stretching, thereby obtaining an AN-based polymer fiber serving as an intermediate. The AN-based polymer fiber was thermally set at 215°C for 3 minutes under tension, thereby obtaining a homoacrylic fiber. The above homoacrylic fiber was cut into 5 mm, and a water-only slurry at a concentration of 2% was applied to a refiner, and beating was performed for the sake of fibrillation, thereby obtaining fibrillated homoacrylic fibers. The homoacrylic fiber had a fiber diameter of 7 $\mu$m, and each of the fibrillated homoacrylic fibers had a fiber diameter in a range of 0.05 to 30 $\mu$m.

Next, 200 parts of the fibrillated homoacrylic fibers, 1200 parts of diethylenetriamine, and 800 parts of water were introduced into an autoclave, were reacted at 130°C for 3 hours, and were subjected to suction filtration, cleaning with water, and drying, thereby obtaining a formed body. The formed body was in the form of fibrillated fibers. The fiber diameter of the formed body (fibrillated homoacrylic fibers) was in a range of 0.04 to 40 $\mu$m. Further, a carbon dioxide sorbent of sample 22 composed of the formed body was produced. The properties of sample 22 are shown in Table 5.

(Sample 23)

An acrylic-based hydrophilic resin composed of acrylonitrile and methoxypolyethylene glycol (30 mol) methacrylate and having an acrylonitrile content ratio of 30% was dispersed in water to obtain a dispersion. Further, a spinning solution (VII), which is composed of an acrylonitrile copolymer composed of acrylonitrile, methyl acrylate, and sodium methallylsulfonate and having an acrylonitrile content ratio of 90%, was obtained. A spinning solution (VIII) was produced from the dispersion and the above-described spinning solution (VII) through a method of mixing with a high shear mixer, and then wet type spinning was performed. For a coagulation liquid, an aqueous solution of sodium rhodanate at a concentration of 12% was used at 5°C. Here, the content of the acrylic-based hydrophilic resin in the spinning solution (VIII) was adjusted to be 2 parts with respect to 98 parts of the acrylonitrile copolymer in the spinning solution (VII). Then, a fibrous material obtained by the wet type spinning was subjected to cleaning with water, heat treatment, and then steam treatment at 115°C in a relaxed state without drying, and was dried at 110°C for 10 minutes, thereby obtaining a porous acrylic fiber. The porous acrylic fiber was cut into 30 mm, water slurry at a concentration of 1.5% was applied to a refiner, and beating was performed for the sake of fibrillation, thereby obtaining fibrillated porous acrylic fibers. The fiber diameter of the porous acrylic fiber was 17 $\mu$m, and the fiber diameters of the fibrillated porous acrylic fibers were in a range of 0.2 to 60 $\mu$m.

Next, 200 parts of the fibrillated porous acrylic fibers, 1200 parts of diethylenetriamine, and 800 parts of water were introduced into an autoclave, were reacted at 130°C for 3 hours, and were subjected to suction filtration, cleaning with water, and drying, thereby obtaining a formed body. The formed body was in the form of fibrillated fibers. The fiber diameter of the formed body (fibrillated homoacrylic fibers) was in a range of 0.05 to 50 $\mu$m. Further, a carbon dioxide sorbent of sample 23 composed of the formed body was produced. The properties of sample 23 are shown in Table 5.

(Sample 2A)

First, the spinning solution (VII) and a spinning solution (IX), which is composed of an acrylonitrile copolymer composed of acrylonitrile, methyl acrylate, and sodium methallylsulfonate and having an acrylonitrile content ratio of 88%, were supplied to an ISG Mixer at a ratio of 1:1 and were subjected to multi-layer mixing, and wet type spinning was performed. As a solvent for the acrylonitrile copolymer, an aqueous solution of sodium rhodanate was used. Further, a fibrous material obtained by the wet type spinning was subjected to cleaning with water, heat treatment, and then steam treatment at 115°C in a relaxed state without drying, and was dried at 110°C for 15 minutes, thereby obtaining a random composite type porous acrylic fiber. The random composite type porous acrylic fiber had a fiber diameter of 18 $\mu$m.

Next, 200 parts of the random composite type porous acrylic fiber, 300 parts of hydrazine, and 1700 parts of water were introduced into an autoclave, were reacted at 130°C for 1 hour, and were subjected to suction filtration, cleaning with water, and drying, thereby obtaining a crosslinked fiber. 200 parts of the crosslinked fiber, 600 parts of diethylenetriamine, and 1400 parts of water were introduced into an autoclave, were reacted at 130°C for 3 hours, and were subjected to suction filtration, cleaning with water, and drying, thereby obtaining a formed body. The formed body was in the form of a fiber, and the fiber diameter of the fiber was 23 $\mu$m. Further, a carbon dioxide sorbent of sample 2A composed of the formed body was produced. The properties of sample 2A are shown in Table 5.

(Sample 2B)

400 parts of the porous acrylic fiber obtained in the process of producing the formed body of sample 23, 2400 parts of diethylenetriamine, and 1600 parts of water were introduced into an autoclave, were reacted at 130°C for 3 hours, and were subjected to suction filtration, cleaning with water, and drying, thereby obtaining a formed body. The formed body was in the form of a fiber, and the fiber diameter of the fiber was 22 $\mu$m. Further, a carbon dioxide sorbent of sample 2B composed of the above formed body was produced. The properties of sample 2B are shown in Table 5.

(Sample 2C)

A monomer mixture liquid composed of 912 parts of acrylonitrile, 84 parts of vinyl acetate and 2 parts of sodium methallylsulfonate was mixed in a polymerization tank with an aqueous solution in which 6 parts of sodium chlorate and 14 parts of sodium pyrosulfite were dissolved in 1860 parts of water, and a temperature thereof was increased to 55°C so as to perform precipitation polymerization for 1 hour, thereby obtaining a polymer dispersion. The polymer dispersion was subjected to centrifugal dehydration, heating, and drying, thereby obtaining acrylonitrile polymer particles. The average particle size of the polymer particles was 56 μm. Next, 200 parts of the polymer particles, 600 parts of diethylenetriamine, and 1400 parts of water were introduced into an autoclave and were reacted at 130°C for 12 hours, thereby obtaining a reaction product. The reaction product was subjected to suction filtration, cleaning with water, and drying, thereby obtaining a formed body. The formed body was in the form of particles (fine particles), and the average particle size of the formed body was 64 μm. Further, a carbon dioxide sorbent of sample 2C composed of the above formed body was produced. The properties of sample 2C are shown in Table 5.

Each of the formed bodies of the carbon dioxide sorbents of samples 21 to 23 and samples 2A to 2C were subjected to the various evaluations described above. Results are shown in Table 5.

[Table 5]

Table. 5

| | | | Sample 21 | Sample 22 | Sample 23 | Sample 2A | Sample 2B | Sample 2C |
|---|---|---|---|---|---|---|---|---|
| Sample Properties | Shape | | Fine Particle | Fibrillated Fiber | Fibrillated Fiber | Fiber | Fiber | Fine Particle |
| | Amino Group Amount | [mmol/g] | 2.6 | 6.1 | 6.0 | 4.1 | 8.0 | 5.6 |
| | $CO_2$ Sorption Amount | [mmol/g] | 2.0 | 2.4 | 2.6 | 0.01 | 0.2 | 0.4 |
| | Saturated Moisture Absorption/Adsorption Ratio (20°C. 90%RH) | [mass%] | 26.2% | 34.2% | 29.4% | 19.3% | 38.8% | 29.9% |
| Mesopores | Specific Surface Area | [m²/g] | 26 | 12 | 10 | 15 | 11 | 5 |
| | Average Pore Size | [μm] | 0.0098 | 0.0071 | 0.0070 | 0.0072 | 0.0069 | 0.0075 |
| | Pore Volume | [mL/g] | 0.0632 | 0.0261 | 0.0175 | 0.0222 | 0.0193 | 0.0085 |
| Macropores | Specific Surface Area | [m²/g] | 6 | 1 | 0.4 | 0.05 | 0.004 | 0.15 |
| | Average Pore Size | [μm] | 0.1793 | 0.4159 | 0.4455 | 0.1203 | 0.6909 | 0.2164 |
| | Pore Volume | [mL/g] | 0.2753 | 0.1028 | 0.0445 | 0.0014 | 0.0007 | 0.0082 |
| Specific Surface Area Ratio (Macropores/Mesopores) | | | 0.2308 | 0.0833 | 0.0368 | 0.0033 | 0.0004 | 0.03 |
| Pore Volume Ratio (Macropores/Mesopores) | | | 4.36 | 3.94 | 2.10 | 0.06 | 0.04 | 0.96 |

<Review>

According to Table 5, it is understood that samples 21 to 23 are more excellent in $CO_2$ sorption ability than samples 2A to 2C. In particular, it is understood that the amount of the amino groups in each of samples 21 to 23 is substantially the same as that in each of samples 2A to 2C, but the $CO_2$ sorption ability in each of samples 21 to 23 is more excellent than that in each of samples 2A to 2C because the specific surface area of the macropores, per g of the formed body, based on the pore classification of the IUPAC is 1 m² or more and the pore volume thereof per g of the formed body is 0.1 mL or more.

[Third Example]

In the following description, samples 31 to 33 are examples of the present disclosure, and samples 3A to 3B are comparative examples. Measurement values measured for each sample in the present example were determined by the following measurement methods.

<Amount of Amino Groups per g of Formed Body>

An amount of amino groups in each of the samples (samples 31 to 33 and samples 3A and 3B) was calculated in the same manner as in the second example.

<Saturated Moisture Absorption/Adsorption Ratio at 20°C and 90% RH>

A saturated moisture absorption/adsorption ratio of each of the samples at 20°C and 90% RH was calculated in the same manner as in the second example.

<Average Pore Size, Specific Surface Area, and Pore Volume of Macropores>

A measurement sample of each sample was prepared in the same manner as in the second example, and the pore distribution of the measurement sample was specified. Further, based on the pore distribution of the measurement sample, an average pore size, a specific surface area, and a pore volume of pores, which correspond to macropores each having a pore size of 50 nm or more and 1000 nm or less based on the pore classification of the IUPAC, were calculated, and these were determined as the average pore size ($[\mu m]$), the specific surface area ($[m^2/g]$), and the pore volume ($[mL/g]$) of the macropores in each sample. In the calculations for the average pore size, the specific surface area, and the pore volume of the macropores, an analysis range for the mercury pressure was $1.46 \times 10^0$ to $2.90 \times 10^1$ MPa.

<$CO_2$ Sorption Amount>

A $CO_2$ sorption amount ($[mmol/g]$) in each sample was determined in the same manner as in the second example.

<Glass Transition Temperature at Time of Moisture Absorption/Adsorption>

5 to 20 mg of each sample in which moisture had been absorbed/adsorbed at appropriate temperature and humidity was weighed and packed in an aluminum pan, and a temperature increase was measured by DSC (differential scanning calorimetry), thereby checking whether or not glass transition was observed at the time of moisture absorption/adsorption (presence or absence of the glass transition temperature at the time of moisture absorption/adsorption). DSC2500 provided by TA Instruments was used as a DSC device, and scanning was performed at a temperature increase rate of 20°C/min from -70°C to 150°C under a nitrogen atmosphere (hereinafter, also referred to as "1st heating measurement"), thereby obtaining a 1st heating chart.

<Glass Transition Temperature at Time of Absolute Dryness>

Each sample having been through the 1st heating measurement was cooled to -70°C, and was then again increased in temperature to 150°C, thereby obtaining a 2nd heating chart. In this way, whether or not the glass transition was observed at the time of absolute dryness (presence or absence of the glass transition temperature at the time of absolute dryness) was checked. A device used, a measurement atmosphere, and a temperature increase rate were the same as those in the 1st heating measurement. A temperature decrease rate was 20°C/min.

<Production of Each Sample>

(Sample 31)

The carbon dioxide sorbent of sample 21 in the second example was used as sample 31. The properties of sample 31 are shown in Table 6.

(Sample 32)

The carbon dioxide sorbent of sample 22 in the second example was used as sample 32. The properties of sample 32 are shown in Table 6.

(Sample 33)

The carbon dioxide sorbent of sample 23 in the second example was used as sample 33. The properties of sample 33 are shown in Table 6.

(Sample 3A)

A monomer mixture liquid composed of 15 parts of acrylonitrile and 15 parts of divinylbenzene serving as a crosslinkable monomer, and an oxidizing agent aqueous solution in which 70 parts of cyclohexane and 4 parts of ammonium persulfate were dissolved in 330 parts of water were added to a polymerization tank, and a temperature thereof was increased to 70°C so as to perform precipitation polymerization for 6 hours, thereby obtaining a polymer dispersion. The polymer dispersion was subjected to centrifugal dehydration, heating, and drying, thereby obtaining porous acrylonitrile-based polymer particles. The average particle size of the polymer particles was 28 $\mu$m. Next, 200 parts of the polymer particles, 1200 parts of diethylenetriamine, and 800 parts of water were introduced into an autoclave, were reacted at 130°C for 16 hours, and were subjected to suction filtration, cleaning with water, and drying, thereby obtaining a formed body. The formed body was in the form of particles (fine particles), and the average particle size of the formed body was 31 $\mu$m. Further, a carbon dioxide sorbent of sample 3A composed of the formed body was produced. The properties of sample 3A are shown in Table 6.

(Sample 3B)

200 parts of the fibrillated homoacrylic fibers obtained in the process of producing the formed body of the carbon dioxide sorbent of sample 32, 600 parts of hydrazine, and 1400 parts of water were introduced into an autoclave, and were reacted at 130°C for 3 hours, thereby obtaining a reaction product. The reaction product was subjected to suction filtration, cleaning with water, and drying, thereby obtaining crosslinked fibrillated homoacrylic fibers. Next, 200 parts of the crosslinked fibrillated homoacrylic fibers, 1200 parts of diethylenetriamine, and 800 parts of water were introduced into an autoclave, were reacted at 130°C for 16 hours, and were subjected to suction filtration, cleaning with water, and drying, thereby obtaining a formed body. The formed body was in the form of fibrillated fibers, and the fiber diameters of the fibers were 0.05 to 40 $\mu$m. Further, a carbon dioxide sorbent of sample 3B composed of the formed body was produced. The properties of sample 3B are shown in Table 6.

The formed bodies of the carbon dioxide sorbents of samples 31 to 33 and samples 3A and 3B were subjected to the various evaluations described above. Results are shown in Table 6.

[Table 6]

Table. 6

| | | | Sample 31 | Sample 32 | Sample 33 | Sample 3A | Sample 3B |
|---|---|---|---|---|---|---|---|
| Sample Properties | Shape | | Fine Particle | Fibrillated Fiber | Fibrillated Fiber | Fine Particle | Fibrillated Fiber |
| | Whether to Apply Crosslinking in Advance (Upon Copolymerization) | | Applied | N/A | N/A | Applied | N/A |
| | Crosslinkable Monomer [mass%] | | 25 | 0 | 0 | 50 | 0 |
| | Whether to Apply Crosslinking Afterward (After Copolymerization) | | N/A | N/A | N/A | N/A | Applied |
| | Amino Group Amount | [mmol/g] | 2.6 | 6.1 | 6.0 | 2.2 | 3.6 |
| | $CO_2$ Sorption Amount | [mmol/g] | 2.0 | 2.4 | 2.6 | 0.7 | 0.4 |
| | Saturated Moisture Absorption/Adsorption Ratio (20°C, 90%RH) | [mass%] | 26.2% | 34.2% | 29.4% | 21.1% | 20.2% |
| | Amine Efficiency ($CO_2$ Sorption Amount/Amino Group Amount) | | 0.77 | 1.08 | 0.43 | 0.30 | 0.11 |
| | Presence/Absence of Glass Transition Temperature at Time of Moisture Absorption/Adsorption | | Present | Present | Present | Absent | Absent |
| | Presence/Absence of Glass Transition Temperature at Time of Absolute Dryness | | Absent | Absent | Absent | Absent | Absent |
| Macropores | Specific Surface Area | [m²/g] | 6 | 1 | 0.4 | 14 | 1 |
| | Average Pore Size | [μm] | 0.1793 | 0.4159 | 0.4455 | 0.1385 | 0.3917 |
| | Pore Volume | [mL/g] | 0.2753 | 0.1028 | 0.0445 | 0.4722 | 0.1234 |

<Review>

According to Table 6, it is understood that samples 31 to 33 are more excellent in $CO_2$ sorption ability than samples 3A and 3B. Particularly in sample 31, it is understood that $CO_2$ is sorbed with high amine efficiency even though the amount of the amino groups in sample 31 is comparable to or smaller than that in each of samples 3A and 3B.

Heretofore, the embodiments and examples of the present invention have been illustrated, but it has been initially expected to appropriately combine configurations of the embodiments and examples.

The embodiments and examples disclosed herein are illustrative and non-restrictive in any respect. The scope of the present invention is defined by the terms of the claims, rather than the embodiments described above, and is intended to include any modifications within the scope and meaning equivalent to the terms of the claims.

**Claims**

1. An amino-group-containing fiber containing 2.0 mmol/g or more of amino groups and having a crosslinking structure, wherein
the amino-group-containing fiber has a saturated moisture absorption/adsorption ratio of 10 mass% or more at 20°C and 65% RH, and has a specific surface area of 10 to 60 m²/g and an average pore size of 10 to 1000 nm as measured by mercury porosimetry.

2. The amino-group-containing fiber according to claim 1, wherein the amino-group-containing fiber has a saturated moisture absorption/adsorption ratio of 20 mass% or more at 20°C and 90% RH.

3. The amino-group-containing fiber according to claim 1 or 2, wherein the amino-group-containing fiber has a fiber diameter of 10 to 50 μm.

4. A fiber structural body containing the amino-group-containing fiber according to any one of claims 1 to 3.

5. The fiber structural body according to claim 4, wherein the fiber structural body has a sheet shape or a monolith shape.

6. An anion exchange fiber containing the amino-group-containing fiber according to any one of claims 1 to 3.

7. An ion exchange device having the anion exchange fiber according to claim 6.

8. A moisture absorbable/adsorbable/desorbable fiber containing the amino-group-containing fiber according to any one of claims 1 to 3.

9. An air conditioning element comprising the moisture absorbable/adsorbable/desorbable fiber according to claim 8.

10. An air conditioning device having the air conditioning element according to claim 9.

11. A gas-adsorbable fiber comprising the amino-group-containing fiber according to any one of claims 1 to 3.

12. A gas adsorption device having the gas-adsorbable fiber according to claim 11.

13. An adsorption type heat cycle device having, as an adsorption core, the amino-group-containing fiber according to any one of claims 1 to 3.

14. A method of producing an amino-group-containing fiber, the method comprising introducing a crosslinking structure and amino groups into a fiber by treating the fiber with an amino-group-containing organic compound, the fiber containing nitrile groups, the fiber having a specific surface area of 10 to 60 $m^2/g$ and an average pore size of 10 to 1000 nm as measured by mercury porosimetry, the amino-group-containing organic compound having a structure in which the total number of amino groups in one molecule is 3 or more, the number of primary amino groups is 2 or more, and the amino groups are bonded by an alkylene group in which the number of carbon atoms is 2.

15. A formed body of an amino-group-containing resin, the formed body comprising 2.0 mmol or more of amino groups per g of the formed body, wherein

   the formed body is provided with a macropore that is based on a pore classification of the International Union of Pure and Applied Chemistry, and
   the macropore has a specific surface area of 0.1 $m^2$ or more per g of the formed body, and has a pore volume of 0.01 mL or more per g of the formed body.

16. A formed body of an amino-group-containing resin, the formed body comprising 2.0 mmol or more of amino groups per g of the formed body,

   the formed body is provided with a macropore that is based on a pore classification of the International Union of Pure and Applied Chemistry,
   the macropore has a specific surface area of 0.1 $m^2$ or more per g of the formed body, and has a pore volume of 0.01 mL or more per g of the formed body,
   the formed body has a glass transition temperature at a time of moisture absorption/adsorption, the glass transition temperature at the time of moisture absorption/adsorption being observed using a differential scanning calorimeter, and
   the formed body has no glass transition temperature in an absolute dry state.

17. The formed body according to claim 15 or 16, wherein the formed body has a saturated moisture absorption/adsorption ratio of 20 mass% or more at 20°C and 90% relative humidity.

18. The formed body according to any one of claims 15 to 17, wherein the amino-group-containing resin is at least one selected from a group consisting of an acrylic-based resin and a cellulose-based resin.

19. The formed body according to any one of claims 15 to 18, wherein the formed body includes a particle.

20. The formed body according to any one of claims 15 to 18, wherein the formed body includes a fiber.

**21.** The formed body according to claim 20, wherein the fiber includes a plurality of fibrillated fibers.

**22.** A carbon dioxide sorbent comprising the formed body according to any one of claims 15 to 21.

**23.** The carbon dioxide sorbent according to claim 22, wherein the carbon dioxide sorbent has a sheet shape or a monolith shape.

**24.** A method of using a carbon dioxide sorbent, the method comprising:

preparing the carbon dioxide sorbent according to claim 22 or 23; and
sorbing carbon dioxide to the carbon dioxide sorbent under an environment in which the carbon dioxide and moisture coexist.

**25.** The method of using the carbon dioxide sorbent according to claim 24, wherein a concentration of the carbon dioxide under the environment is 10 volume% or less.

**26.** A carbon dioxide separation/capture device comprising the carbon dioxide sorbent according to claim 22 or 23.

## INTERNATIONAL SEARCH REPORT

| International application No. |
| --- |
| **PCT/JP2024/003309** |

**A. CLASSIFICATION OF SUBJECT MATTER**

*D06M 13/332*(2006.01)i; *B01D 53/04*(2006.01)i; *B01D 53/62*(2006.01)i; *B01D 53/81*(2006.01)i; *B01J 20/26*(2006.01)i; *B01J 20/28*(2006.01)i; *B01J 20/30*(2006.01)i; *C08F 8/32*(2006.01)i; *C08J 9/28*(2006.01)i; *D06M 101/28*(2006.01)n

FI: D06M13/332; B01D53/04; B01D53/62 ZAB; B01D53/81; B01J20/26 A; B01J20/28 A; B01J20/28 Z; B01J20/30; C08F8/32; C08J9/28 CEY; D06M101:28

According to International Patent Classification (IPC) or to both national classification and IPC

**B. FIELDS SEARCHED**

Minimum documentation searched (classification system followed by classification symbols)

D06M13/00-15/715;B01D53/02-53/12;B01D53/34-53/85;B01D53/92;B01D53/96;B01J20/00-20/28;B01J20/30-20/34;C08C19/00-19/44;C08F6/00-246/00;C08F301/00;C08J9/00-9/42

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2009-7728 A (JAPAN EXLAN CO., LTD.) 15 January 2009 (2009-01-15) claims 1, 2, 4, 8, 9, paragraphs [0020], [0021], [0028], [0030], [0031], examples 2, 3, 5, 9, 11 | 1-14 |
| A | | 15-26 |
| Y | JP 7-150471 A (JAPAN EXLAN CO., LTD.) 13 June 1995 (1995-06-13) claim 1, paragraphs [0001], [0018] | 1-14 |
| A | | 15-26 |
| Y | JP 2003-342831 A (JAPAN EXLAN CO., LTD.) 03 December 2003 (2003-12-03) claim 3, paragraphs [0003], [0018], [0019] | 1-14 |
| A | | 15-26 |

☑ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **25 March 2024** | **09 April 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
| --- |
| **PCT/JP2024/003309** |

### C. DOCUMENTS CONSIDERED TO BE RELEVANT

| Category* | Citation of document, with indication, where appropriate, of the relevant passages | Relevant to claim No. |
| --- | --- | --- |
| A | US 2019/0091624 A1 (KING FAHD UNIVERSITY OF PETROLEUM AND MINERALS) 28 March 2019 (2019-03-28)<br>claim 1, paragraph [0069] | 1-26 |
| A | CN 105195113 A (EAST CHINA UNIVERSITY OF SCIENCE AND TECHNOLOGY) 30 December 2015 (2015-12-30)<br>Claims 1, 2, and 6 | 1-26 |
| A | JP 1-208310 A (SUMITOMO CHEMICAL CO., LTD.) 22 August 1989 (1989-08-22)<br>claims, examples | 1-26 |
| A | JP 2003-166118 A (ASAHI KASEI CORP.) 13 June 2003 (2003-06-13)<br>examples | 1-26 |
| A | JP 6656608 B1 (JAPAN EXLAN CO., LTD.) 04 March 2020 (2020-03-04)<br>claims, paragraphs [0002]-[0004] | 1-26 |

Form PCT/ISA/210 (second sheet) (July 2022)

## INTERNATIONAL SEARCH REPORT

| International application No. |
| --- |
| **PCT/JP2024/003309** |

**Box No. III    Observations where unity of invention is lacking (Continuation of item 3 of first sheet)**

This International Searching Authority found multiple inventions in this international application, as follows:

(Invention 1)
    The inventions in claims 1-14 are classified as invention 1 as a result of having the special technical feature in which "the specific surface area measured by mercury porosimetry is 10-60 m$^2$/g and the average pore diameter is 10-1000 nm".
(Invention 2)
    The inventions in claims 15 and 16-26 have the special technical feature of "the macropores have a specific surface area of at least 0.1 m$^2$ per 1 g of the molded body, and have a pore volume of at least 0.01 mL per 1 g of the molded body". This cannot be said to be identical to or correspond to the special technical feature of invention 1.
    Therefore, the inventions in claims 15 and 16-26 are classified as invention 2.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
Information on patent family members

International application No.

**PCT/JP2024/003309**

| Patent document cited in search report | | | Publication date (day/month/year) | Patent family member(s) | Publication date (day/month/year) |
|---|---|---|---|---|---|
| JP | 2009-7728 | A | 15 January 2009 | (Family: none) | |
| JP | 7-150471 | A | 13 June 1995 | US 5436275 A claim 1, column 3, lines 21-29, column 5, lines 25-42 | |
| JP | 2003-342831 | A | 03 December 2003 | (Family: none) | |
| US | 2019/0091624 | A1 | 28 March 2019 | (Family: none) | |
| CN | 105195113 | A | 30 December 2015 | (Family: none) | |
| JP | 1-208310 | A | 22 August 1989 | (Family: none) | |
| JP | 2003-166118 | A | 13 June 2003 | (Family: none) | |
| JP | 6656608 | B1 | 04 March 2020 | CN 111868322 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63075041 A
- JP 2000064175 A
- JP 10156179 A
- JP 2009007728 A
- JP 2020044504 A
- JP 2019150768 A
- JP 2019013906 A
- JP 2020075215 A
- JP 2021121435 A
- WO 2010091831 A

**Non-patent literature cited in the description**

- **P. LI et al.** *Langmuir*, 2008, vol. 24, 6567-6574